# EUROPÄISCHE PATENTANMELDUNG

(11) **EP 4 443 013 A1**
(43) Veröffentlichungstag der Anmeldung: **09.10.2024**
(21) Anmeldenummer: 23166360.0
(22) Anmeldetag: 03.04.2023
(51) Int. Cl.: F16C 19/38, F16C 33/37, F16C 33/58, F16H 1/28, F16H 3/62, F16H 57/04, F16H 57/08

(54) **LAGERANORDNUNG FÜR GETRIEBE**

(71) Anmelder: Spinea s.r.o., 080 01 Haniska (SK)
(72) Erfinder: FECKO, Tibor, 080 01 Presov (SK); SUCKA, Daniel, 080 06 Presov-Nizná Sebastová (SK)
(74) Vertreter: Jeck, Jonathan

(57) **Zusammenfassung**

Es wird eine Lageranordnung (02, 02.1, 02.2, 02.3, 02.4, 02.5, 02.6, 02.7, 02.8, 02.9, 02.10, 02.11, 02.12, 02.13, 02.14, 02.15, 02.16, 02.17, 02.18, 02.19) für ein kompakt zu bauendes Getriebe (01, 01.1, 01.4, 01.5) beschrieben, mit zwei als einen Hohlkörper (2) mit einer Hohlkörperachse (2x) und ein um diese drehbarer Drehkörper (1) ausgebildeten, relativ zueinander drehbaren Lagerorganen, zwischen denen zwei Wälzkörper (6) umfassende Wälzlagerringe angeordnet sind. An einem der beiden Lagerorgane (1, 2) ist ein Vorsprung mit einer radial zum verbleibenden Lagerorgan (2, 1) weisenden Spitze angeordnet, die zwischen zwei die axiale Erstreckung des Vorsprungs begrenzenden, entgegengesetzt geneigten, ersten Kegelstumpfmantelflächen zweier mit ihren Kegelachsen mit der Hohlkörperachse (2x) übereinstimmender Kegel liegt, auf jeder dieser erste Wälzkörperlaufflächen (1a, 2a) bildender erster Kegelstumpfmantelflächen die Wälzkörper (6) jeweils eines Wälzlagerrings abwälzen. Gegenüberliegend am verbleibenden Lagerorgan (2, 1) sind zwei V-(Kehl-)nuten eingelassen, jeweils eine deren Kehlnutwandungen eine von insgesamt zwei den ersten Wälzkörperlaufflächen (1a, 2a) gegenüberliegenden zweiten Kegelstumpfmantelflächen als zweite Wälzkörperlaufflächen (2a, 1a) bildet, auf jeder von denen die Wälzkörper (6) je eines der zwei Wälzlagerringe am verbleibenden Lagerorgan (2, 1) abwälzen. Axial beidseitig des Vorsprungs ist jeweils ein Wälzlagerring zwischen den jeweiligen ersten und zweiten Wälzkörperlaufflächen (1a, 2a) angeordnet. Axial beidseitig der Wälzlagerringe ist jeweils ein Stützring (3, 4) angeordnet. Die Stützringe (3, 4) weisen auf ihren dem Vorsprung zugewandten Stirnseiten jeweils eine kegelstumpfmantelflächenförmige Stützfläche (3b, 4b) auf, welche zusammen mit den ersten Wälzkörperlaufflächen (1a, 2a) die Nutwandungen zweier zweigeteilter V-(Kehl-)nuten bilden.

## Beschreibung

Die Erfindung betrifft eine Lageranordnung für ein Getriebe gemäß dem Oberbegriff des Anspruchs 1.

Zykloidgetriebe und Planetengetriebe sind Getriebeformen, die eine hohe Belastbarkeit, einen geringen Bauraumbedarf und ein großes Übersetzungsverhältnis aufweisen und darüber hinaus nicht selbsthemmend sind.

Ein Zykloidgetriebe umfasst einen Hohlkörper mit einer Hohlkörperachse. Diese bildet eine zentrale Achse des Zykloidgetriebes. Das Zykloidgetriebe umfasst außerdem:
- mindestens eine in dem Hohlkörper abwälzende Zykloidenscheibe,
- mindestens eine Exzenterwelle mit einer der Anzahl der Zykloidenscheiben entsprechenden Zahl von jeweils an oder in einer der Zykloidenscheiben drehbar gelagerten exzentrischen Abschnitten,
- einen um die zentrale Achse drehbar am oder im Hohlkörper gelagerten Drehkörper, sowie
- Transformationsmittel zur Umwandlung der Bewegungen der einen oder mehreren Zykloidenscheiben bei deren Abwälzung im Hohlkörper in eine Rotationsbewegung des Drehkörpers.

Beispielsweise kann die Zykloidenscheibe mit einer zentralen Öffnung und mit mindestens einer außermittigen Öffnung versehen sein. Entlang der zentralen Achse kann sich eine zentrale Exzenterwelle erstrecken. Jeder deren der Anzahl der Zykloidenscheiben entsprechenden Zahl exzentrischer Abschnitte ist in einer zentralen Öffnung einer Zykloidenscheibe drehbar angeordnet. Die Transformationsmittel umfassen eine höchstens der Anzahl der außermittigen Öffnungen entsprechenden Zahl von gemeinsam um die zentrale Achse drehbar angeordneten außermittigen Elementen. Typischerweise sind die außermittigen Elemente Teil des Drehkörpers, welcher mit einer Welle verbunden sein kann, diese umfassen kann oder von dieser umfasst sein kann.

Ein Planetengetriebe ist beispielsweise ein Stirn- oder Reibradgetriebe, welches neben gestellfesten Wellen auch Wellen besitzt, die auf Kreisbahnen im Gestell umlaufen. Die Achsen der umlaufenden Wellen können parallel zu den Achsen der gestellfesten Wellen verlaufen. Auf den umlaufenden Wellen drehende Planetenräder umkreisen ein zentrales Sonnenrad.

Wichtig ist, in diesem Zusammenhang voranzustellen, dass im vorliegenden Dokument der Begriff Achse im Gegensatz zu dem Begriff Welle eine geometrische Achse und nicht ein Maschinenelement bezeichnet.

Ein besonders hohes Übersetzungsverhältnis kann durch ein zwei- oder mehrstufiges Getriebe erhalten werden, welches ein eine erste Getriebestufe bildendes Zykloidgetriebe und ein eine zweite Getriebestufe bildendes Planetengetriebe kombiniert. Hierbei dienen die Bezeichnungen erste und zweite Getriebestufe lediglich der Unterscheidung und stellen keine vorgegebene Reihenfolge dar. Unter anderem ist dies auch dadurch begründet, dass weder Zykloidgetriebe noch Planetengetriebe selbsthemmend sind. Dementsprechend können deren beispielsweise durch Wellen gebildete Eingangs- und Ausgangsorgane in dem Sinne vertauscht werden, dass sie sowohl von der einen als auch von der anderen Welle her ohne zu blockieren antreibbar sind.

Ein als hierzu dienende Getriebestufe vorgesehenes Zykloidgetriebe ist vorteilhaft mit einer oder mehreren drehbar am Drehkörper gelagerten, außermittigen Exzenterwellen mit jeweils einer der Anzahl der Zykloidenscheiben entsprechenden Zahl von exzentrischen Abschnitten, die in außermittigen Öffnungen der Zykloidenscheiben drehbar gelagert sind ausgestattet. Planetenräder des hierzu als Getriebestufe dienenden Planetengetriebes sind unverdrehbar mit den außermittigen Exzenterwellen verbunden, und sind gemeinsam mit diesen um die zentrale Achse drehbar angeordnet. Die außermittigen Exzenterwellen bilden zugleich die Transformationsmittel.

Beispiele für entsprechende Getriebe und für diese geeignete Lageranordnungen sind in WO 2019/096723 A1 beschrieben.

Nachteilig sowohl an Zykloidgetrieben, als auch an der Kombination von Zykloid- und Planetengetriebe in einem mehrstufigen Getriebe ist der hohe Montageaufwand. Dieser ist einerseits bedingt durch den Aufwand zum Zusammenfügen der Wälzkörper und Separatoren umfassenden Lagerelemente zwischen die relativ zueinander drehbaren Lagerorgane Hohlkörper und gegenüber diesem um die Hohlkörperachse drehbarem Drehkörper. Zur Aufnahme eines Wälzlagerrings ist ein Lagernutpaar vorgesehen. Das Lagernutpaar umfasst jeweils eine Lagernut in dem einen Lagerorgan - dem Hohlkörper - und eine dieser gegenüberliegend zugeordnete Lagernut in dem anderen Lagerorgan - dem Drehkörper. Zeitgleich müssen die im Hohlkörper sowie am Drehkörper darüber hinaus untergebrachten Funktionsteile der jeweiligen Getriebe eingebracht werden. Erschwert wird dies andererseits durch die insgesamt engen Platzverhältnisse der kompakt zu bauenden Getriebe. Außerdem ist die Belastbarkeit der im Hinblick auf einen vertretbaren Montageaufwand optimierten Lageranordnung beschränkt.

Die Momentenbelastbarkeit der Lageranordnung zwischen Hohlkörper und Drehkörper ist insbesondere aufgrund der im Hinblick auf eine vertretbaren Montagefreundlichkeit einreihigen Lagergestaltung als Kreuzrollenlager mit nur einem Wälzlagerring zwischen Hohlkörper und Drehkörper beschränkt.

Bei einer zweireihigen Lageranordnung mit zwei entlang der Hohlkörperachse voneinander beabstandeten Wälzlagerringen nach dem Stand der Technik müssen die Wälzkörper und Separatoren umfassenden Wälzlagerelemente der Wälzlagerringe aufwändig Stück für Stück in korrekter, gegebenenfalls abwechselnder Ausrichtung durch in die zur Aufnahme der Wälzlagerringe vorgesehenen Lagernutpaare zwischen Hohlkörper und Drehkörper führende Beschickungslöcher eingebracht werden. Dies ist zeitaufwändig und fehleranfällig. Darüber hinaus müssen die Beschickungslöcher anschließend in einem eigenen Arbeitsschritt verschlossen werden. Nachträgliche Korrekturen erfordern eine Demontage unter Entnahme der Lagerelemente durch die Beschickungslöcher heraus. Dies geht mit noch größerem Zeitaufwand einher, als schon zur Montage nötig.

Ein mit den insgesamt engen Platzverhältnissen des kompakt zu bauenden Getriebes einhergehender Nachteil insbesondere eines Zykloidgetriebes mit außermittigen Exzenterwellen ist die eingeschränkte Belastbarkeit der die drehbare Anordnung der außermittigen Exzenterwellen am Drehkörper besorgenden Lageranordnungen. Aufgrund mit größer werdendem Wellendurchmesser zunehmender Belastbarkeit von Lageranordnungen ist dies zwischen Drehkörper und außermittigen Exzenterwellen wesentlich kritischer als bei den zwischen deren exzentrischen Abschnitten und den die außermittigen Öffnungen der Zykloidenscheiben begrenzenden Wandungen angeordneten Lageranordnungen. Dies wird dadurch besonders erschwert, dass zum Erhalt möglichst geringer Reibungsverluste der Einsatz von Wälzlagern im gesamten Getriebe bevorzugt ist.

Der Vollständigkeit halber sei erwähnt, dass eine höhere Belastbarkeit auch bezüglich der Lageranordnung zwischen exzentrischen Abschnitten einer zentralen Exzenterwelle und mit ihrer zentralen Öffnung auf einem solchen Abschnitt drehbar angeordneter Zykloidenscheibe wünschenswert wäre.

Eine Aufgabe der Erfindung ist der Erhalt einer höheren Belastbarkeit einer Lageranordnung für ein kompakt zu bauendes Getriebe sowie der Erhalt einer höheren Belastbarkeit eines kompakt zu bauenden Getriebes insgesamt unter gleichzeitiger Wahrung dessen vorteilhafter Eigenschaften, dies zumindest unter Beibehaltung eines vertretbaren Montageaufwands, vorzugsweise jedoch unter verringertem Montageaufwand.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung betrifft eine Lageranordnung für ein kompakt zu bauendes Getriebe, mit zwei drehbar zueinander gelagerten Lagerorganen. Bevorzugt umfassen die Lagerorgane einen Hohlkörper mit einer Hohlkörperachse und einen in dem Hohlkörper um die Hohlkörperachse drehbar gelagerten Drehkörper. Zwischen den Lagerorganen sind zwei Wälzlagerringe in zwei entlang der Hohlkörperachse voneinander beabstandeten Nutpaaren angeordnet.

Jedes Nutpaar besteht aus einer durch zwei Nutwandungen begrenzten Nut am einen Lagerorgan und einer gegenüberliegenden, ebenfalls durch zwei Nutwandungen begrenzten Nut am verbleibenden Lagerorgan. Jeweils eine Nutwandung jeder Nut ist als Wälzkörperlauffläche, die verbleibende Nutwandung als Wälzkörperstützfläche ausgebildet. Innerhalb eines Nutpaars grenzen die Wälzkörperlaufflächen an die Wälzkörperstützflächen. Die Wälzkörperlaufflächen sind einander gegenüberliegend angeordnet, ebenso wie die Wälzkörperstützflächen.

Jeder Wälzlagerring besteht bevorzugt aus beispielsweise abwechselnd Wälzkörper und Separatoren umfassenden Wälzlagerelementen. Zwischen den beiden Lagerorganen verbleibt ein Ringspalt.

An einem der beiden drehbar zueinander gelagerten Lagerorgane, i.e. am Hohlkörper oder am Drehkörper, ist ein in axialer Richtung durch zwei unmittelbar benachbarte, in Bezug auf die Hohlkörperachse axial zueinander versetzte und in entgegengesetzten Richtungen geneigt angeordnete erste Kegelstumpfmantelflächen begrenzter, radialer Vorsprung ausgebildet, mit einer zum gegenüberliegenden Lagerorgan in den Ringspalt ragenden Spitze, bei der die beiden ersten Kegelstumpfmantelflächen unmittelbar zueinander benachbart sind, auf jeder dieser erste Wälzkörperlaufflächen bildender erster Kegelstumpfmantelflächen die Wälzkörper jeweils eines Wälzlagerrings zweier axial beabstandeter Wälzlagerringe aus abwechselnd Wälzkörper und Separatoren umfassenden Wälzlagerelementen abwälzen.

Mit anderen Worten weist der radiale Vorsprung an seinen beiden axialen Flanken die beiden ersten Kegelstumpfmantelflächen auf, welche die beiden ersten Wälzkörperlaufflächen bilden, auf denen die Wälzkörper der beiden Wälzlagerringe an dem einen Lagerorgan abwälzen.

Gegenüberliegend am verbleibenden Lagerorgan, hier gemäß der Reihenfolge der erstmaligen Erwähnung in Bezug auf den Vorsprung am Drehkörper oder am Hohlkörper, sind zwei entlang der Hohlkörperachse axial voneinander beabstandete V-(Kehl-)nuten eingelassen, von denen jeweils eine der Kehlnutwandungen eine von insgesamt zwei den ersten Wälzkörperlaufflächen gegenüberliegenden zweiten Kegelstumpfmantelflächen als zweite Wälzkörperlaufflächen bildet, auf jeder von denen die Wälzkörper je eines der zwei Wälzlagerringe am verbleibenden Lagerorgan abwälzen. Die je V-(Kehl-)nut verbleibende Kehlnutwandung bildet lediglich eine kegelstumpfmantelflächenförmige zweite Wälzkörperstützfläche, die ein Abgleiten der Wälzkörper des jeweiligen Wälzlagerrings von der jeweiligen zweiten Wälzkörperlauffläche quer zu deren Abrollbewegung verhindert.

In axialer Richtung beidseitig des Vorsprungs ist jeweils ein Wälzlagerring der beiden Wälzlagerringe zwischen den jeweiligen ersten und zweiten Wälzkörperlaufflächen angeordnet, je ein Wälzlagerring auf jeder Seite.

In axialer Richtung beidseitig der Wälzlagerringe ist jeweils ein die Wälzlagerelemente der Wälzlagerringe in ihren Positionen auf den Wälzkörperlaufflächen haltender Stützring angeordnet, je ein Stützring auf jeder Seite.

Auf ihren in axialer Richtung gesehen dem radialen Vorsprung zugewandten Stirnseiten weisen die Stützringe jeweils eine die ersten Wälzkörperlaufflächen bildenden ersten Kegelstumpfmantelflächen beidseitig des Vorsprungs zu je einer V-(Kehl-)nut ergänzende, kegelstumpfmantelflächenförmige Stützfläche auf. Mit anderen Worten bildet jede Stützfläche zusammen mit einer ersten Wälzkörperlauffläche die Nutwandungen einer zweigeteilten V-(Kehl-)nut.

Jede der insgesamt zwei Stützflächen dient lediglich als eine kegelstumpfmantelflächenförmige erste Wälzkörperstützfläche, die ein Abgleiten der Wälzkörper des jeweiligen Wälzlagerrings von der an den jeweiligen Stützring angrenzenden ersten Wälzkörperlauffläche des Vorsprungs quer zu deren Abrollbewegung verhindert.

Die Stützflächen überragen die ersten Wälzkörperlaufflächen normal zur Hohlkörperachse bis um ein Maß, welches ausreicht, die Wälzlagerelemente in axialer Position zu halten.

Die Stützringe ragen damit seitlich der Wälzlagerelemente der Wälzlagerringe zum Teil in den Ringspalt zwischen Hohlkörper und Drehkörper hinein, beispielsweise bis zur Hälfte.

Es ist ersichtlich, dass der Gegenstand der Erfindung alternativ durch ein beispielsweise als ein Zykloidgetriebe ausgeführtes Getriebe mit einem Hohlkörper mit einer Hohlkörperachse und einem gegenüber diesem um die Hohlkörperachse drehbar angeordneten Drehkörper und mit einer voranstehend beschriebenen, den Drehkörper drehbar gegenüber dem Hohlkörper lagernden Lageranordnung verwirklicht sein kann.

Die Lageranordnung kann einzelne oder eine Kombination der zuvor und/oder nachfolgend in Verbindung mit dem Getriebe beschriebene Merkmale aufweisen, ebenso wie das Getriebe einzelne oder eine Kombination mehrerer zuvor und/oder nachfolgend in Verbindung mit der Lageranordnung beschriebene Merkmale aufweisen und/oder verwirklichen kann.

Die Lageranordnung und/oder das Getriebe können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind ebenfalls nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

| | |
|---|---|
| Fig. 1-G | ein Ausführungsbeispiel eines Getriebes 01 in einem entlang dessen zentraler Getriebeachse 01x verlaufenden Schnitt A-A gemäß Fig. 2-G. |
| Fig. 2-G | |
| FIG.3-G | |
| FIG.5-G | |
| Fig. 6-G | eine perspektivische Explosionsdarstellung der Hohl-Drehkörper-Lageranordnung des Getriebes 01 aus Fig. 1-G (gemäß Detail A im in Fig. 1-G gezeigten Querschnitt A-A durch das Getriebe 01). |
| FIG.8-G | |
| Fig. 9-G | ein Ausführungsbeispiel eines als Hohlwellengetriebe mit Hohl-Drehkörper-Lageranordnung ausgeführten Getriebes 01.1 in einem entlang dessen mit einer Hohlkörperachse 2x übereinstimmender zentraler Getriebeachse 10x verlaufenden Schnitt A-A gemäß Fig. 12-G. |
| Fig. 12-G | |
| Fig. 13-G | |
| Fig. 14-G | eine perspektivische Explosionsdarstellung der Hohl-Drehkörper-Lageranordnung des Getriebes 01.1 aus Fig. 9-G (gemäß Detail A im in Fig. 9-G gezeigten Querschnitt A-A durch das Getriebe 01.1). |
| FIG.15-G | |
| Fig. 17-G | ein Ausführungsbeispiel eines als Hohlwellengetriebe, jedoch ohne eine in Fig. 6-G oder Fig. 14-G gezeigte Hohl-Drehkörper-Lageranordnung ausgeführten Getriebes 01.2. |
| Fig. 18-G | ein Ausführungsbeispiel eines ohne eine in Fig. 6-G oder Fig. 14-G gezeigte Hohl-Drehkörper-Lageranordnung ausgeführten Getriebes 01.3. |
| Fig. 19-G | |
| Fig. 20-G | |
| Fig. 21-G | |
| Fig. 22-G | |
| Fig. 23-G | |
| Fig. 24-G | |
| Fig. 25-G | |
| Fig. 26-G | |
| Fig. 27-G | |
| Fig. 1-L | ein Ausführungsbeispiel einer Lageranordnung 02 in perspektivischer Explosionsdarstellung. |
| Fig. 2-L | die Lageranordnung 02 aus Fig. 1-L in einem die Hohlkörperachse 2x einschließenden Längsschnitt A-A gemäß Fig. 5-L. |
| Fig. 3-L | ein Ausführungsbeispiel einer Lageranordnung 02.1 in einem die Hohlkörperachse 2x einschließenden Längsschnitt A-A gemäß Fig. 5-L. |
| Fig. 4-L | ein Ausführungsbeispiel einer Lageranordnung 02.2 in einem die Hohlkörperachse 2x einschließenden Längsschnitt A-A gemäß Fig. 5-L. |
| Fig. 5-L | die Lageranordnung 02 aus Fig. 2-L, die Lageranordnung 02.1 aus Fig. 3-L und die Lageranordnung 02.2 aus Fig. 4-L in einer Seitenansicht B-B gemäß Fig. 2-L, Fig. 3-L und Fig. 4-L zur Veranschaulichung der Lage der in den Fig. 2-L, Fig. 3-L und Fig. 4-L gezeigten Schnitte A-A. |
| Fig. 6-L | einen Schritt-für-Schritt-Ablauf einer Montage der Lageranordnung 02 aus Fig. 1-L, wobei a) einen Ausgangszustand mit dem Drehkörper 1 als Lagerinnenring, Fig. 6-L b) das Einsetzen des Stützrings 3, Fig. 6-L c) das Einsetzen der Wälzkörper 6 und Separatoren 7 umfassenden Wälzlagerelemente des ersten Wälzlagerrings zwischen den Stützring 3 und den Drehkörper 1, Fig. 6-L d) das Einsetzen des Hohlkörpers 2 als Lageraußenring, Fig. 6-L e) das Einsetzen der Wälzkörper 6 und Separatoren 7 umfassenden Wälzlagerelemente des zweiten Wälzlagerrings zwischen den Hohlkörper 2 und den Drehkörper 1, Fig. 6-L f) das Einsetzen des Stützrings 4, und Fig. 6-L g) den Einbau der Dichtung 5 zeigt. |
| Fig. 7-L | ein Ausführungsbeispiel einer beispielsweise einen Teil eines Getriebes 01.4 zeigenden Struktur mit einer Lageranordnung 02.3 in einem Schnitt A-A gemäß Fig. 8-L. |
| Fig. 8-L | die beispielsweise einen Teil eines Getriebes 01.4 zeigenden Struktur aus Fig. 7-L in einer Seitenansicht B-B gemäß Fig. 7-L. |
| Fig. 9-L | ein Ausführungsbeispiel einer beispielsweise einen Teil eines Getriebes 01.5 zeigenden Struktur mit einer Lageranordnung 02.4 in einem Schnitt A-A gemäß Fig. 10-L. |
| Fig. 10-L | die beispielsweise einen Teil eines Getriebes 01.5 zeigenden Struktur aus Fig. 9-L in einer Seitenansicht B-B gemäß Fig. 9-L. |
| Fig. 11-L | ein Ausführungsbeispiel einer Lageranordnung 02.5 in perspektivischer Explosionsdarstellung. |
| Fig. 12-L | die Lageranordnung 02.5 aus Fig. 11-L in einem Längsschnitt. |
| Fig. 13-L | ein Ausführungsbeispiel einer Lageranordnung 02.6 in einem Längsschnitt und in einer zugehörigen Seitenansicht. |
| Fig. 14-L | einen Schritt-für-Schritt-Ablauf einer Montage der Lageranordnung 02.5 aus Fig. 11-L, wobei Fig. 14-L a) einen Ausgangszustand mit dem Hohlkörper 2, Fig. 14-L b) das Einsetzen des Stützrings 4, Fig. 14-L c) das Einsetzen der Wälzkörper 6 und Separatoren 7 umfassenden Wälzlagerelemente des ersten Wälzlagerrings zwischen den Stützring 4 und den Hohlkörper 2, Fig. 14-L d) das Einsetzen des Drehkörpers 1, Fig. 14-L e) das Einsetzen der Wälzkörper 6 und Separatoren 7 umfassenden Wälzlagerelemente des zweiten Wälzlagerrings zwischen den Hohlkörper 2 und den Drehkörper 1, Fig. 14-L f) das Einsetzen des Stützrings 3, Fig. 14-L g) das Einsetzen des äußeren Sprengrings 9, und Fig. 14-L h) die Montage der Dichtung 5 zeigt. |
| Fig. 15-L | ein Ausführungsbeispiel einer Lageranordnung 02.7 in einem Längsschnitt. |
| Fig. 15a-L | ein Detail eines Ausführungsbeispiels einer Lageranordnung 02.08. |
| Fig. 15b-L | ein Detail eines Ausführungsbeispiels einer Lageranordnung 02.09. |
| Fig. 16-L | ein Ausführungsbeispiel einer Lageranordnung 02.10 in einem die Hohlkörperachse 2x einschließenden Längsschnitt A-A gemäß Fig. 18-L. |
| Fig. 16a-L | ein Detail eines ersten Ausführungsbeispiels der Lageranordnung 02.10 aus Fig. 16-L. |
| Fig. 16b-L | ein Detail eines zweiten Ausführungsbeispiels der Lageranordnung 02.10 aus Fig. 16-L. |
| Fig. 16c-L | ein Detail eines dritten Ausführungsbeispiels der Lageranordnung 02.10 aus Fig. 16-L. |
| Fig. 16d-L | ein Detail eines vierten Ausführungsbeispiels der Lageranordnung 02.10 aus Fig. 16-L. |
| Fig. 16e-L | ein Detail eines fünften Ausführungsbeispiels der Lageranordnung 02.10 aus Fig. 16-L. |
| Fig. 16f-L | ein Detail eines sechsten Ausführungsbeispiels der Lageranordnung 02.10 aus Fig. 16-L. |
| Fig. 17-L | ein Ausführungsbeispiel einer Lageranordnung 02.11 in einem die Hohlkörperachse 2x einschließenden Längsschnitt A-A gemäß Fig. 19-L. |
| Fig. 18-L | die Lageranordnung 02.10 aus Fig. 16-L in einer Seitenansicht B-B gemäß Fig. 16-L. |
| Fig. 19-L | die Lageranordnung 02.11 aus Fig. 17-L in einer Seitenansicht B-B gemäß Fig. 17-L. |
| Fig. 20-L | ein Ausführungsbeispiel einer Lageranordnung 02.12 in einem Längsschnitt. |
| Fig. 21-L | ein Ausführungsbeispiel einer Lageranordnung 02.13 in einem Längsschnitt. |
| Fig. 22-L | ein Ausführungsbeispiel einer Lageranordnung 02.14 in einem Längsschnitt. |
| Fig. 23-L | ein Ausführungsbeispiel einer Lageranordnung 02.15 in einem Längsschnitt. |
| Fig. 24-L | ein Ausführungsbeispiel einer Lageranordnung 02.16 in einem Längsschnitt. |
| Fig. 25-L | ein Ausführungsbeispiel einer Lageranordnung 02.17 in einem Längsschnitt. |
| Fig. 26-L | ein Ausführungsbeispiel einer symmetrischen Lageranordnung 02.18, bei der der Vorsprung am Innenumfang des Hohlkörpers 2 vorgesehen ist und beide Stützringe 3, 4 am Hohlkörper 2 angeordnet sind, in einem Längsschnitt. |
| Fig. 26a)-L | eine Darstellung einer dem in Fig. 26b)-L gezeigten Montagezwischenschritt zuvor kommenden ersten Folge von Montageschritten zur Herstellung der Lageranordnung 02.18 aus Fig. 26-L unter Zuhilfenahme eines Montageflanschs 202 in einem Längsschnitt. |
| Fig. 26b)-L | eine Darstellung des Montagezwischenschritts zur Herstellung der Lageranordnung 02.18 aus Fig. 26-L unter Zuhilfenahme eines Montageflanschs 202, bei welchem Montagezwischenschritt die bis dato zusammengebaute Montageanordnung gedreht und der Montageflansch 202 anschließend entfernt wird, in einem Längsschnitt. |
| Fig. 26c)-L | eine Darstellung einer dem in Fig. 26b)-L gezeigten Montagezwischenschritt nach folgenden zweiten Folge von Montageschritten zur Fertigstellung der Lageranordnung 02.18 aus Fig. 26-L nach entfernen des Montageflanschs 202 in einem Längsschnitt. |
| Fig. 27-L | ein Ausführungsbeispiel einer symmetrischen Lageranordnung 02.19, bei der der Vorsprung am Außenumfang des Drehkörpers 1 vorgesehen ist und beide Stützringe 3, 4 am Drehkörper 1 angeordnet sind, in einem Längsschnitt. |
| Fig. 27a)-L | eine Darstellung einer dem in Fig. 27b)-L gezeigten Montagezwischenschritt zuvor kommenden ersten Folge von Montageschritten zur Herstellung der Lageranordnung 02.19 aus Fig. 27-L unter Zuhilfenahme eines Montageflanschs 203 in einem Längsschnitt. |
| Fig. 27b)-L | eine Darstellung des Montagezwischenschritts zur Herstellung der Lageranordnung 02.19 aus Fig. 27-L unter Zuhilfenahme eines Montageflanschs 203, bei welchem Montagezwischenschritt die bis dato zusammengebaute Montageanordnung gedreht und der Montageflansch 203 anschließend entfernt wird, in einem Längsschnitt. |
| Fig. 27c)-L | eine Darstellung einer dem in Fig. 27b)-L gezeigten Montagezwischenschritt nach folgenden zweiten Folge von Montageschritten zur Fertigstellung der Lageranordnung 02.19 aus Fig. 27-L nach entfernen des Montageflanschs 203 in einem Längsschnitt. |

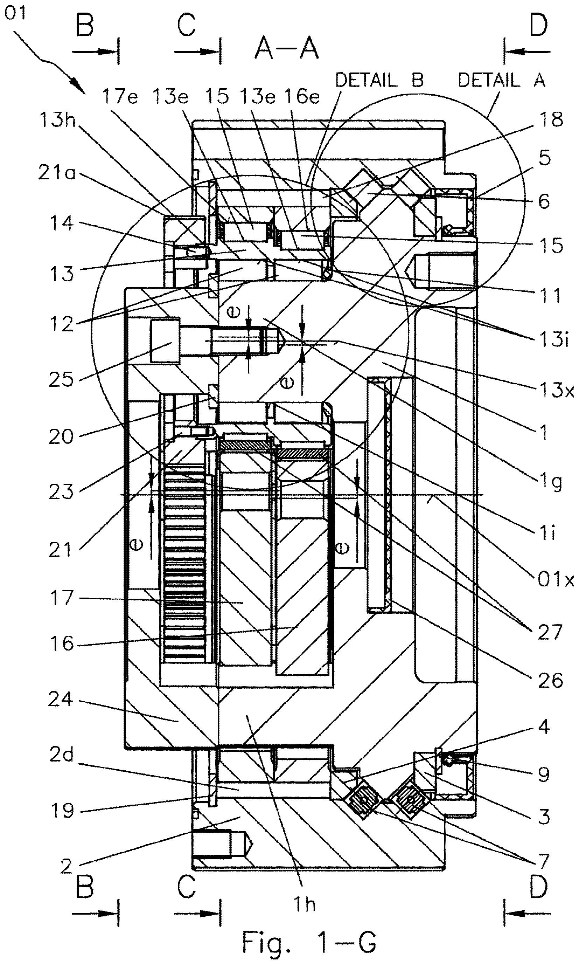

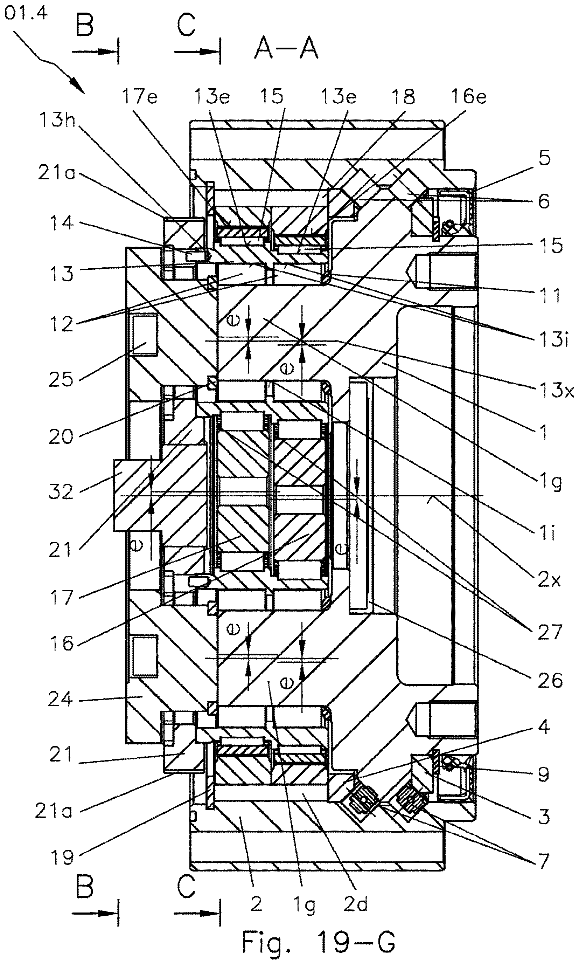

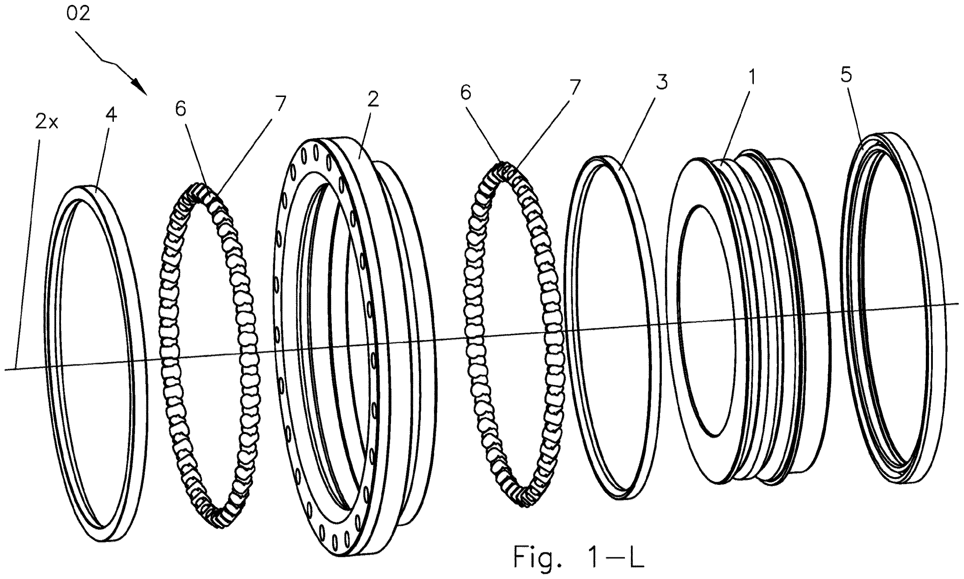

Eine in Fig. 1-G, Fig. 6-G, Fig. 9-G, Fig. 14-G sowie in den Fig. 1-L bis Fig. 27c)-L ganz oder teilweise gezeigte, als Hohl-Drehkörper-Lageranordnung bezeichnete Lageranordnung 02, 02.1, 02.2, 02.3, 02.4, 02.5, 02.6, 02.7, 02.8, 02.9, 02.10, 02.11, 02.12, 02.13, 02.14, 02.15, 02.16, 02.17, 02.18, 02.19 mit zwei relativ zueinander drehbaren Lagerorganen ist wie nachfolgend beschrieben aufgebaut.

Wichtig ist and dieser Stelle hervorzuheben, dass für alle beschriebenen, in den Fig. 1-L bis 27c)-L dargestellten und als Hohl-Drehkörper-Lageranordnung bezeichneten Lageranordnungen nachfolgend einheitlich die Bezugsziffer 02 zu deren allgemeiner Beschreibung verwendet wird, es sei denn, es wird explizit auf eine in einer Zeichnung oder Gruppe von Zeichnungen dargestellte spezielle Lageranordnung eingegangen. In diesem Fall ist die in der jeweiligen Zeichnung oder Gruppe von Zeichnungen verwendete Bezugsziffer für die dort gezeigte Lageranordnung angegeben.

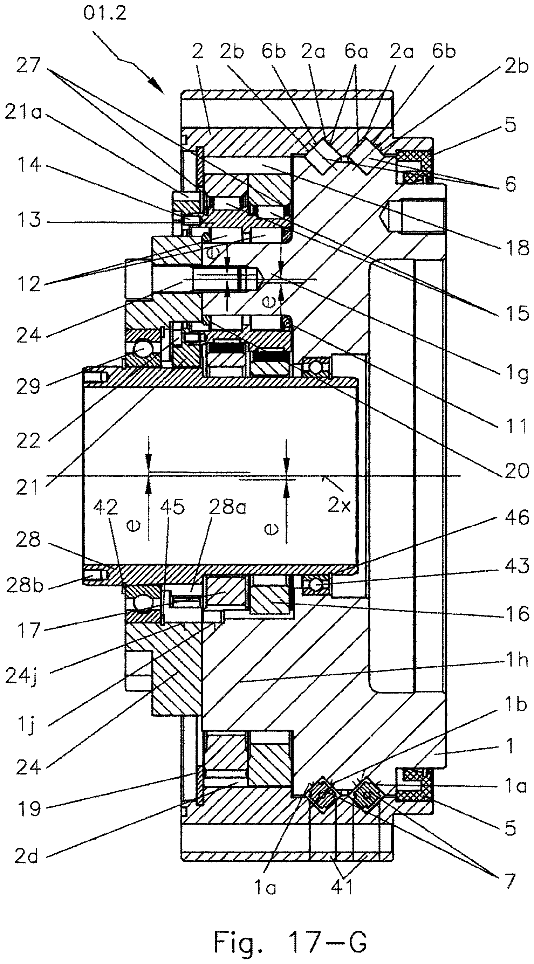

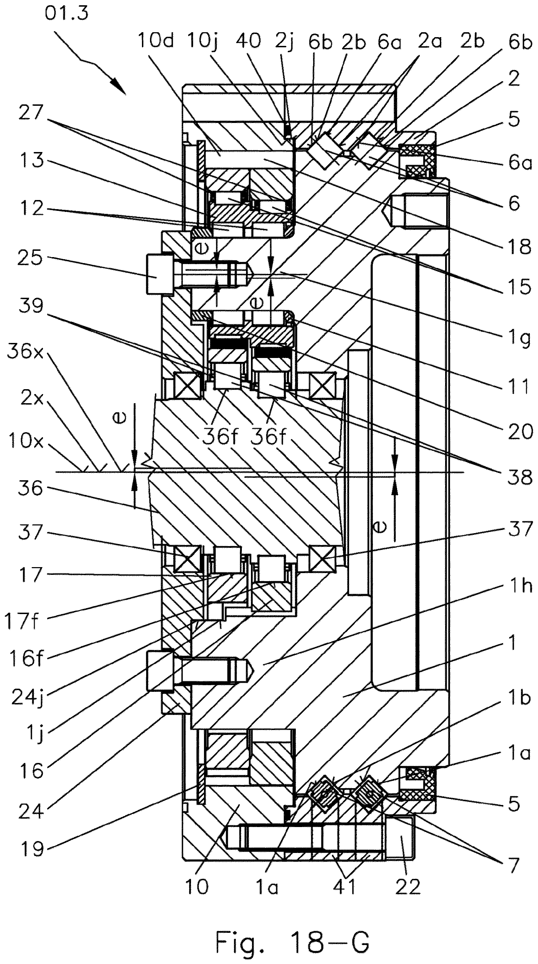

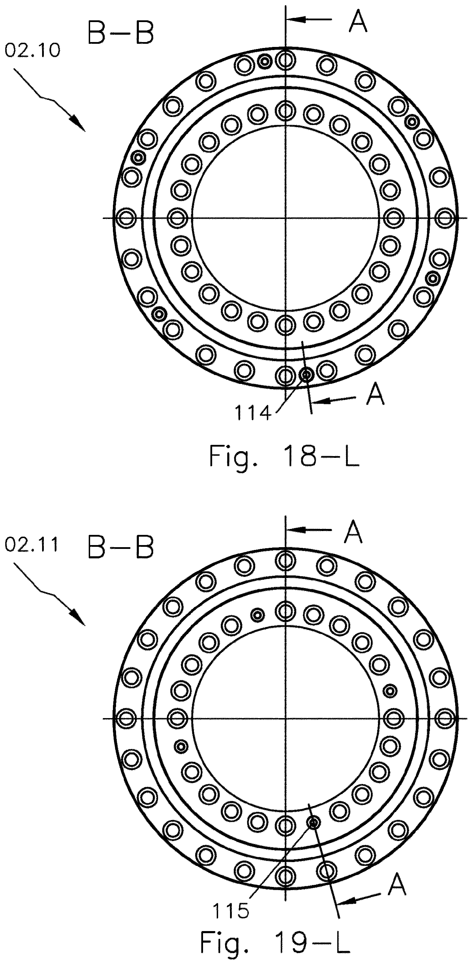

Die Hohl-Drehkörper-Lageranordnung 02 mit einem Hohlkörper 2 mit einer Hohlkörperachse 2x und einem um diese relativ zum Hohlkörper 2 drehbaren Drehkörper 1 als die beiden relativ zueinander drehbaren Lagerorgane umfasst zwei Wälzlagerringe mit Schrägkontakt. Die Wälzkörper 6 als Wälzlagerelemente umfassenden Wälzlagerringe sind zwischen den beiden relativ zueinander drehbaren Lagerorganen angeordnet. Um auf Beschickungslöcher 41 (Fig. 17-G und Fig. 18-G) verzichten zu können, sind die Wälzlagerringe zwischen zwei axialen Stützringen 3, 4 angeordnet.

Die als Hohl-Drehkörper-Lageranordnung 02 bezeichnete Lageranordnung eignet sich besonders für ein kompakt zu bauendes Getriebe 01, 01.1, 01.4, 01.5 mit zwei drehbar zueinander gelagerten Lagerorganen. Bevorzugt umfassen die Lagerorgane einen Hohlkörper 2 mit einer Hohlkörperachse 2x und einen in dem Hohlkörper 2 um die Hohlkörperachse 2x drehbar gelagerten Drehkörper 1. Zwischen den Lagerorganen sind zwei Wälzlagerringe angeordnet.

Die Wälzkörper 6 der beiden Wälzlagerringe rollen auf zwei benachbarten, um die Hohlkörperachse 2x umlaufenden inneren Wälzkörperlaufflächen 1a am Drehkörper 1, und auf zwei diesen gegenüberliegend am Hohlkörper 2 angeordneten äußeren Wälzkörperlaufflächen 2a ab.

Die beiden Wälzlagerringe sind durch einen Vorsprung, beispielsweise einen Trennsteg voneinander getrennt. Die beiden Wälzlagerringe sind beidseitig des Vorsprungs angeordnet, in axialer Richtung entlang der Hohlkörperachse 2x gesehen je ein Wälzlagerring auf jeder Seite des Vorsprungs. Beidseitig der beiden Wälzlagerringe sind zwei Stützringe 3, 4 angeordnet, in axialer Richtung entlang der Hohlkörperachse 2x gesehen je ein Stützring 3, 4 auf der dem Vorsprung abgewandten Seite eines jeden der beiden Wälzlagerringe.

Gemäß einer bevorzugten Ausgestaltung weist eine in Fig. 1-G, Fig. 6-G, Fig. 9-G, Fig. 14-G, und in den Fig. 1-L bis Fig. 27c)-L ganz oder zum Teil dargestellte Hohl-Drehkörper-Lageranordnung 02 für ein kompakt zu bauendes Getriebe 01, 01.1 zwei als einen Hohlkörper 2 mit einer Hohlkörperachse 2x und ein um diese drehbarer Drehkörper 1 ausgebildete, relativ zueinander drehbare Lagerorgane auf. Zwischen den Lagerorganen sind zwei Wälzlagerringe aus Wälzkörper 6 sowie gegebenenfalls beispielsweise Separatoren 7 umfassenden Wälzlagerelementen angeordnet.

An einem der beiden Lagerorgane, nämlich am Drehkörper 1 oder am Hohlkörper 2, ist ein Vorsprung mit einer in Bezug zur Hohlkörperachse 2x radial zum verbleibenden Lagerorgan, nämlich dem Hohlkörper 2 oder dem Drehkörper 1, weisenden Spitze angeordnet. Die Spitze liegt zwischen zwei die in Bezug zur Hohlkörperachse 2x axiale Erstreckung des Vorsprungs begrenzenden, entgegengesetzt geneigten, ersten Kegelstumpfmantelflächen zweier mit ihren Kegelachsen mit der Hohlkörperachse 2x übereinstimmender Kegel. Auf jeder dieser erste, beispielsweise innere Wälzkörperlaufflächen 1a (wenn der Vorsprung am Außenumfang des Drehkörpers 1 radial absteht) beziehungsweise äußere Wälzkörperlaufflächen 2a (wenn der Vorsprung am Innenumfang des Hohlkörpers 2 radial nach innen zur Hohlkörperachse 2x hin ragt) bildender erster Kegelstumpfmantelflächen wälzen die Wälzkörper (6) jeweils eines Wälzlagerrings ab.

Gegenüberliegend am verbleibenden Lagerorgan, nämlich am Hohlkörper 2 oder am Drehkörper 1, je nachdem welcher Körper das erste Lagerorgan bildet, sind zwei V-(Kehl-)nuten eingelassen. Jeweils eine der Kehlnutwandungen der beiden V-(Kehl-)nuten bildet eine von insgesamt zwei den ersten Wälzkörperlaufflächen 1a, 2a gegenüberliegenden zweiten Kegelstumpfmantelflächen als zweite, äußere Wälzkörperlaufflächen 2a (wenn der Vorsprung am Außenumfang des Drehkörpers 1 radial absteht) beziehungsweise innere Wälzkörperlaufflächen 1a (wenn der Vorsprung am Innenumfang des Hohlkörpers 2 radial nach innen zur Hohlkörperachse 2x hin ragt). Auf jeder von den zweiten Wälzkörperlaufflächen 2a, 1a wälzen die Wälzkörper 6 je eines der zwei Wälzlagerringe am verbleibenden Lagerorgan, hier dem Hohlkörper 2 oder dem Drehkörper 1, je nachdem welcher Körper das erste Lagerorgan bildet, ab.

In axialer Richtung entlang der Hohlkörperachse 2x gesehen ist beidseitig des Vorsprungs jeweils ein Wälzlagerring der beiden Wälzlagerringe zwischen den jeweiligen ersten und zweiten beziehungsweise inneren und äußeren Wälzkörperlaufflächen 1a, 2a angeordnet, je ein Wälzlagerring auf jeder Seite.

In axialer Richtung entlang der Hohlkörperachse 2x gesehen beidseitig der Wälzlagerringe ist jeweils ein die Wälzlagerelemente 6, 7 der Wälzlagerringe in ihren Positionen auf den Wälzkörperlaufflächen 1a, 2a haltender Stützring 3, 4 angeordnet, je ein Stützring 3, 4 auf jeder dem Vorsprung abgewandten Seite der Wälzlagerringe.

Die Stützringe 3, 4 weisen auf ihren dem Vorsprung zugewandten Stirnseiten jeweils eine kegelstumpfmantelflächenförmige Stützfläche 3b, 4b auf. Jede Stützfläche 3b, 4b bildet zusammen mit einer ersten, inneren Wälzkörperlauffläche 1a (wenn der Vorsprung am Drehkörper 1 angeordnet und damit auch die ersten Wälzkörperlaufflächen 1a am Drehkörper 1 ausgebildet sind) beziehungsweise äußeren Wälzkörperlauffläche 2a (wenn der Vorsprung am Hohlkörper 2 angeordnet und damit auch die ersten Wälzkörperlaufflächen 2a am Hohlkörper 2 ausgebildet sind) die Nutwandungen zweier zweigeteilter V-(Kehl-)nuten.

Bevorzugt sind die zwei Wälzlagerringe in zwei entlang der Hohlkörperachse 2x voneinander beabstandeten Nutpaaren angeordnet

Jedes Nutpaar besteht aus einer durch zwei Nutwandungen begrenzten Nut am einen Lagerorgan und einer gegenüberliegenden, ebenfalls durch zwei Nutwandungen begrenzten Nut am verbleibenden Lagerorgan. Jeweils eine Nutwandung jeder Nut ist als Wälzkörperlauffläche 1a, 2a, die verbleibende Nutwandung als innere beziehungsweise äußere Wälzkörperstützfläche 1b, 2b ausgebildet. Innerhalb eines Nutpaars grenzt jede Wälzkörperlauffläche 1a, 2a beidseitig an eine Wälzkörperstützfläche 1b, 2b, 3b, 4b und umgekehrt. Die Wälzkörperlaufflächen 1a, 2a sind dadurch einander gegenüberliegend angeordnet, ebenso wie die Wälzkörperstützflächen 1b, 2b, 3b, 4b einander gegenüberliegend angeordnet sind.

Jeder Wälzlagerring besteht bevorzugt aus beispielsweise abwechselnd Wälzkörper 6 und Separatoren 7 umfassenden Wälzlagerelementen. Zwischen den beiden Lagerorganen verbleibt ein Ringspalt, um deren relative Verdrehbarkeit sicherzustellen.

An einem der beiden drehbar zueinander gelagerten Lagerorgane, i.e. am Hohlkörper 2 oder am Drehkörper 1, ist ein in Bezug zur Hohlkörperachse 2x in axialer Richtung durch zwei vorzugsweise unmittelbar benachbarte, in Bezug auf die Hohlkörperachse 2x axial zueinander versetzte und in entgegengesetzten Richtungen geneigt angeordnete erste Kegelstumpfmantelflächen begrenzter, radialer Vorsprung ausgebildet, mit einer zum gegenüberliegenden Lagerorgan in den Ringspalt ragenden Spitze, bei der die beiden ersten Kegelstumpfmantelflächen unmittelbar zueinander benachbart sind, auf jeder dieser erste, wie voranstehend ausgeführt innere oder äußere Wälzkörperlaufflächen 1a, 2a bildender erster Kegelstumpfmantelflächen die Wälzkörper 6 jeweils eines Wälzlagerrings zweier axial beabstandeter Wälzlagerringe aus beispielsweise abwechselnd Wälzkörper 6 und Separatoren 7 umfassenden Wälzlagerelementen abwälzen.

Mit anderen Worten weist der radiale Vorsprung an seinen beiden axialen Flanken die beiden ersten Kegelstumpfmantelflächen auf, welche die beiden ersten, inneren oder äußeren Wälzkörperlaufflächen 1a, 2a bilden, auf denen die Wälzkörper 6 der beiden Wälzlagerringe an dem einen Lagerorgan abwälzen.

Alternativ kann dies formuliert werden, dass an einem der Lagerorgane:
- ein Vorsprung mit einer radial zum verbleibenden Lagerorgan weisenden Spitze angeordnet ist, der in axialer Richtung durch zwei entgegengesetzt geneigte erste Kegelstumpfmantelflächen zweier mit ihren Kegelachsen mit der Hohlkörperachse 2x übereinstimmender Kegel begrenzt ist, oder
- ein Vorsprung mit einer radial zum verbleibenden Lagerorgan weisenden, zwischen zwei die axiale Erstreckung des Vorsprungs begrenzenden, entgegengesetzt geneigten, ersten Kegelstumpfmantelflächen zweier mit ihren Kegelachsen mit der Hohlkörperachse 2x übereinstimmender Kegel liegende Spitze angeordnet ist, oder
- ein in axialer Erstreckung durch zwei entgegengesetzt geneigte, erste Kegelstumpfmantelflächen zweier mit ihren Kegelachsen mit der Hohlkörperachse 2x übereinstimmender Kegel begrenzter Vorsprung mit einer zwischen den ersten Kegelstumpfmantelflächen liegenden, radial zum verbleibenden Lagerorgan weisenden Spitze angeordnet ist.

Gegenüberliegend am verbleibenden Lagerorgan, hier gemäß der Reihenfolge der erstmaligen Erwähnung in Bezug auf den Vorsprung am Drehkörper 1 oder am Hohlkörper 2, sind zwei entlang der Hohlkörperachse 2x axial voneinander beabstandete V-(Kehl-)nuten eingelassen. Je V-(Kehl-)nut bildet eine der Kehlnutwandungen eine von insgesamt zwei den ersten Wälzkörperlaufflächen 1a, 2a gegenüberliegenden zweiten Kegelstumpfmantelflächen als zweite, wie voranstehend ausgeführt äußere oder innere Wälzkörperlaufflächen 2a, 1a. Auf jeder zweiten Wälzkörperlauffläche 2a, 1a wälzen die Wälzkörper 6 je eines der zwei Wälzlagerringe am verbleibenden Lagerorgan ab. Die je V-(Kehl-)nut verbleibende Kehlnutwandung bildet lediglich eine kegelstumpfmantelflächenförmige zweite Wälzkörperstützfläche 1b, 2b, die ein Abgleiten der Wälzkörper 6 des jeweiligen Wälzlagerrings von der jeweiligen zweiten Wälzkörperlauffläche 2a, 1a quer zu deren Abrollbewegung verhindert.

In axialer Richtung beidseitig des Vorsprungs ist jeweils ein Wälzlagerring der beiden Wälzlagerringe zwischen den jeweiligen ersten und zweiten Wälzkörperlaufflächen 1a, 2a angeordnet, je ein Wälzlagerring auf jeder Seite.

In axialer Richtung beidseitig der Wälzlagerringe ist jeweils ein die Wälzlagerelemente der Wälzlagerringe in ihren Positionen auf den Wälzkörperlaufflächen 1a, 2a haltender Stützring 3, 4 angeordnet, je ein Stützring 3, 4 auf jeder dem Vorsprung abgewandten Seite der beiden Wälzlagerringe.

Auf ihren in axialer Richtung gesehen dem radialen Vorsprung zugewandten Stirnseiten weisen die Stützringe 3, 4 jeweils eine kegelstumpfmantelflächenförmige Stützfläche 3b, 4b auf, welche die in axialer Richtung beidseitig des Vorsprungs ausgebildeten ersten Wälzkörperlaufflächen 1a, 2a bildenden ersten Kegelstumpfmantelflächen zu je einer V-(Kehl-)nut ergänzen. Mit anderen Worten bildet jede Stützfläche 3b, 4b zusammen mit einer ersten Wälzkörperlauffläche 1a, 2a die Nutwandungen einer zweigeteilten V-(Kehl-)nut.

Jede der insgesamt zwei an den Stützringen 3, 4 ausgebildeten Stützflächen 3b, 4b dient lediglich als eine kegelstumpfmantelflächenförmige erste Wälzkörperstützfläche, die ein Abgleiten der Wälzkörper 6 des jeweiligen Wälzlagerrings von der an den jeweiligen Stützring 3, 4 angrenzenden ersten Wälzkörperlauffläche 1a, 2a des Vorsprungs quer zu deren Abrollbewegung verhindert.

Die Stützflächen 3b, 4b überragen die ersten Wälzkörperlaufflächen 1a, 2a normal zur Hohlkörperachse 2x bis um ein Maß, welches ausreicht, die Wälzlagerelemente in axialer Position zu halten.

Die Stützringe 3, 4 ragen damit seitlich der Wälzlagerelemente der Wälzlagerringe zum Teil in den Ringspalt zwischen Hohlkörper 2 und Drehkörper 1 hinein, beispielsweise bis zur Hälfte.

Die Hohl-Drehkörper-Lageranordnung 02 kann demnach als eine Lageranordnung für ein kompakt zu bauendes Getriebe 01, 01.1, 01.2, 01.4, 01.5 mit zwei relativ zueinander drehbar angeordneten Lagerorganen beschrieben werden. Bei den Lagerorganen handelt es sich vorzugsweise um einen Hohlkörper 2 mit einer Hohlkörperachse 2x und einen in dem Hohlkörper 2 um die Hohlkörperachse 2x drehbar gelagerten Drehkörper 1. Mit anderen Worten umfasst die Hohl-Drehkörper-Lageranordnung 02 den Hohlkörper 2 und den in dem Hohlkörper 2 um die Hohlkörperachse 2x drehbar gelagerten Drehkörper 1 als deren Lagerorgane. Zwischen dem Hohlkörper 2 und dem Drehkörper 1 sind zwei Wälzlagerringe aus beispielsweise abwechselnd Wälzkörper 6 und Separatoren 7 umfassenden Wälzlagerelementen angeordnet. Die beiden Wälzlagerringe sind in zwei entlang der Hohlkörperachse 2x voneinander beabstandeten Lagernutpaaren zwischen Hohlkörper 2 und Drehkörper 1 zumindest zum Teil beherbergt. Diese Einschränkung betrifft beispielsweise den Umstand, dass zumindest ein Ringspalt zwischen Hohlkörper 2 und Drehkörper 1 verbleiben muss, damit letzterer drehbar gegenüber ersterem ist. Die hohlkörperseitigen Lagernuten weisen je eine zur Hohlkörperachse 2x geneigte äußere Wälzkörperlauffläche 2a auf. Die äußeren Wälzkörperlaufflächen 2a befinden sich auf den Mantelflächen zweier entgegengesetzt entlang der Hohlkörperachse 2a angeordneter gerader Kreiskegel. Die äußeren Wälzkörperlaufflächen 2a sind in entgegengesetzten Richtungen unter einem Winkel zueinander geneigt angeordnet. Der zwischen den äußeren Wälzkörperlaufflächen 2a eingeschlossene Winkel der hohlkörperseitigen Lagernuten beträgt beispielsweise 75° bis 105°. Die drehkörperseitigen Lagernuten sind gegenüberliegend der hohlkörperseitigen Lagernuten angeordnet. Die drehkörperseitigen Lagernuten weisen analog zu den äußeren Wälzkörperlaufflächen 2a je eine zur Hohlkörperachse 2x geneigte innere Wälzkörperlauffläche 1a auf.

Die inneren Wälzkörperlaufflächen 1a befinden sich auf den Mantelflächen zweier im Vergleich zu den äußeren Wälzkörperlaufflächen 2a umgekehrt entgegengesetzt entlang der Hohlkörperachse 2x angeordneter gerader Kreiskegel. Jede der beiden inneren Wälzkörperlaufflächen 2a ist gegenüberliegend einer äußeren Wälzkörperlauffläche 1a angeordnet. Auch die inneren Wälzkörperlaufflächen 1a sind in entgegengesetzten Richtungen unter einem Winkel zur Hohlkörperachse 2x geneigt angeordnet. Der eingeschlossene Winkel zwischen den inneren Wälzkörperlaufflächen 1a der hohlkörperseitigen Lagernuten beträgt beispielsweise 105° bis 75°.

Die Wälzkörperlaufflächen 2a der hohlkörperseitigen Lagernuten oder die Wälzkörperlaufflächen 1a der drehkörperseitigen Lagernuten können unmittelbar zueinander benachbart angeordnet sein. Diese begrenzen den zuvor erwähnten Vorsprung.

Dementsprechend ist der Vorsprung am Hohlkörper 2 nach innen ragend angeordnet, wenn die Wälzkörperlaufflächen 2a der hohlkörperseitigen Lagernuten unmittelbar zueinander benachbart angeordnet sind. Alternativ ist der Vorsprung am Drehkörper 1 nach außen ragend angeordnet, wenn die Wälzkörperlaufflächen 1a der drehkörperseitigen Lagernuten unmittelbar zueinander benachbart angeordnet sind.

Die Wälzkörperlaufflächen 1a, 2a der verbleibenden Lagernuten sind hierbei voneinander beabstandet angeordnet. Deren verbleibenden Lagernutwandungen können als Stützflächen 1b, 2b ausgebildet sein. Als Stützflächen 1b, 2b ausgebildete Lagernutwandungen sind unmittelbar zu den am selben Lagerorgan ausgebildeten Wälzkörperlaufflächen 1a, 2a benachbart. Die Stützflächen 1b, 2b führen die auf den am selben Lagerorgan ausgebildeten Wälzkörperlaufflächen 1a, 2a abrollenden Wälzkörper 6 der Wälzlagerringe an deren Stirnflächen 6b.

Die Wälzkörperlaufflächen 1a, 2a entsprechen jeweils der Mantelfläche eines Kegelstumpfs.

Die Kegelstumpfe, deren Mantelflächen die äußeren Wälzkörperlaufflächen 2a bilden, haben eine Grundfläche mit dem Außendurchmesser der äußeren Wälzkörperlaufflächen 2a und eine Deckfläche mit dem Innendurchmesser der äußeren Wälzkörperlaufflächen 2a.

Die Kegelstumpfe, deren Mantelflächen die inneren Wälzkörperlaufflächen 1a bilden, haben eine Grundfläche mit dem Außendurchmesser der inneren Wälzkörperlaufflächen 1a und eine Deckfläche mit dem Innendurchmesser der inneren Wälzkörperlaufflächen 1a.

Die in axialer Richtung entlang der Hohlkörperachse 2x gesehen am weitesten voneinander beabstandeten Lagernutwandungen, welche die Lagernuten mit den unmittelbar zueinander benachbarten, entgegengesetzt geneigten Wälzkörperlauflächen 1a, 2a begrenzen, befinden sich an zwei beidseitig der Wälzlagerringe angeordneten Stützringen 3, 4.

Vorzugsweise schneiden die Wälzkörperachsen der Wälzkörper 6 der beiden Wälzlagerringe der Hohl-Drehkörper-Lageranordnung 02 die Hohlkörperachse 2x.

Die Hohl-Drehkörper-Lageranordnung 02 kann für ein als Zykloidgetriebe ausgebildetes Getriebe 01, 01.1 mit mindestens einer im Hohlkörper 2 oder in einem Getriebegehäuse 10 abwälzenden, auf einem exzentrischen Abschnitt 13e, 36f mindestens einer um eine parallel zur Hohlkörperachse 2x verlaufende Exzenterwelle 13, 36 drehbar angeordneten Zykloidenscheibe 16, 17 ausgebildet sein.

Der Vorsprung kann wie bereits erwähnt am Innenumfang des Hohlkörpers 2 angeordnet sein. In diesem Fall ragt er radial nach innen und ist durch zwei äußere Wälzkörperlaufflächen 2a in axialer Richtung entlang der Hohlkörperachse 2x gesehen begrenzt. Die die inneren Wälzkörperlaufflächen 1a als jeweils erste Nutwandung und die beiden unmittelbar zueinander benachbarten Stützflächen 1b als jeweils verbleibende Nutwandung aufweisenden V-(Kehl-)nuten sind am Drehkörper 1 angeordnet.

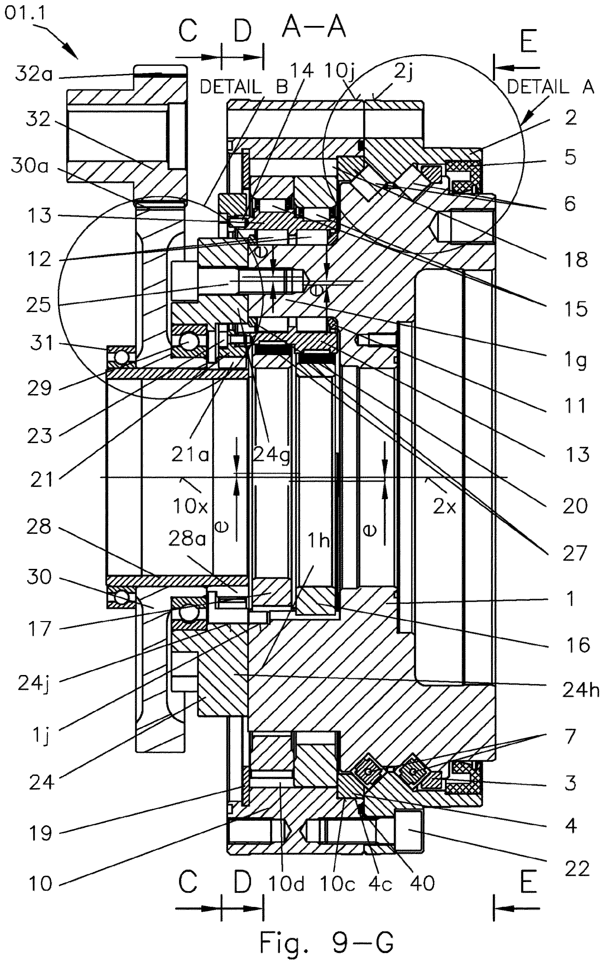

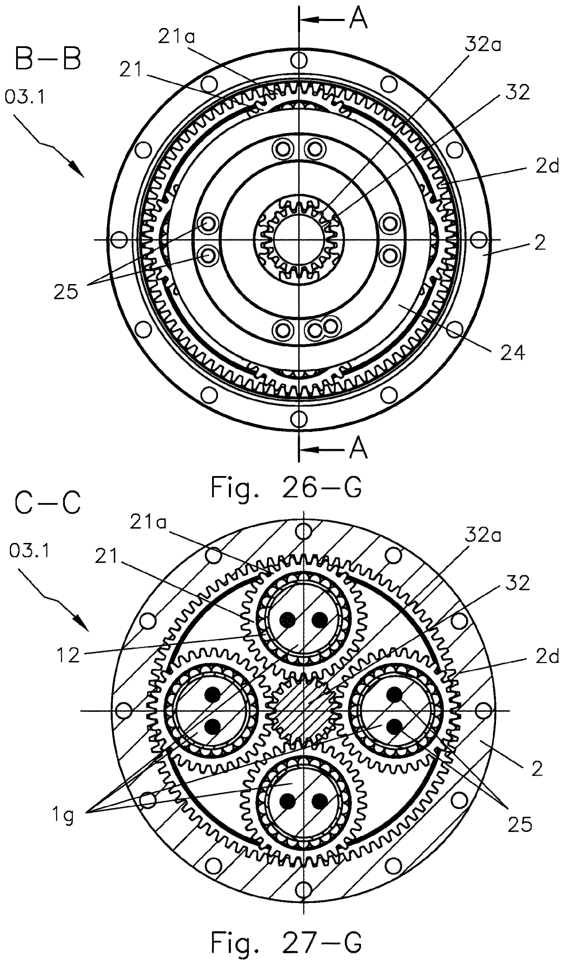

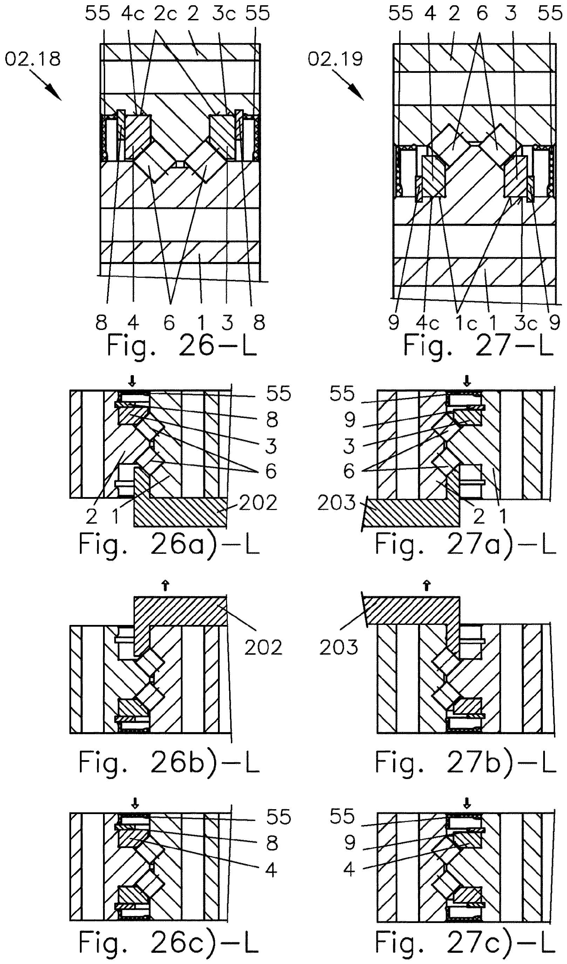

Beispielsweise kann vorgesehen sein, dass:
- am Innenumfang eines durch den Hohlkörper 2 gebildeten, hohlzylinderförmigen Außenrings, bei dem es sich beispielsweise um ein Gehäuse eines Getriebes 01.1, 01.4, 01.5 handeln kann, ein radial nach innen ragender Vorsprung mit zwei konzentrisch zur die Hohlkörperachse 2x bildenden Zylinderachse in entgegengesetzten Richtungen geneigt angeordneten, in Bezug auf die Zylinderachse axial zueinander versetzten äußeren Kegelstumpfmantelflächen als äußere Wälzkörperlaufflächen 2a ausgebildet ist, welche geneigt angeordneten äußeren Wälzkörperlaufflächen 2a zwischen sich einen Winkel von 80° bis 100°, bevorzugt von 90°, einschließen, und auf denen die Wälzkörper 6 zweier Wälzlagerringe am Hohlkörper 2 abwälzen (Lageranordnungen 02, 02.1, 02.2, 02.3, 02.4, 02.10, 02.12, 02.13, 02.14, 02.18; Fig. 9-G, Fig. 14G, Fig. 1-L, Fig. 2-L, Fig. 3-L, Fig. 4-L, Fig. 6-L, Fig. 7-L, Fig. 9-L, Fig. 16-L, Fig. 20-L, Fig. 21-L, Fig. 22-L, Fig. 26-L, Fig. 26a)-L, Fig. 26b)-L, Fig. 26c)-L),
- am Außenumfang eines durch den Drehkörper 1 gebildeten Innenrings, bei dem es sich beispielsweise um ein Ausgangsorgan eines Getriebes 01.1, 01.4, 01.5 handeln kann, zwei entlang der mit der Hohlkörperachse 2x übereinstimmenden Zylinderachse axial voneinander beabstandete V-(Kehl-)nuten eingelassen sind, von denen jeweils eine der Kehlnutwandungen eine von insgesamt zwei den äußeren Wälzkörperlaufflächen 2a gegenüberliegenden inneren Kegelstumpfmantelflächen als innere Wälzkörperlaufflächen 1a bildet, auf denen die Wälzkörper 6 der zwei Wälzlagerringe am Drehkörper 1 abwälzen,
- die je V-(Kehl-)Nut am Drehkörper 1 jeweils verbleibende Kehlnutwandung eine von insgesamt zwei zu den inneren Wälzkörperlaufflächen 1a benachbarten Stützflächen 1b bildet, welche die Wälzkörper 6 der zwei Wälzlagerringe an deren drehkörperseitigen Stirnflächen 6b führen,
- in axialer Richtung beidseitig des Vorsprungs ein Wälzlagerring zwischen den jeweiligen inneren Wälzkörperlaufflächen 1a und äußeren Wälzkörperlaufflächen 2a angeordnet ist, und
- in axialer Richtung beidseitig der Wälzlagerringe jeweils ein die Wälzlagerelemente der Wälzlagerringe in ihrer Position auf den Wälzkörperlaufflächen 1a, 2a haltender Stützring 3, 4 angeordnet ist,
- auf den dem Vorsprung zugewandten Stirnseiten der Stützringe 3, 4 jeweils eine Stützfläche 3b, 4b ausgebildet ist, welche die Wälzkörper 6 der zwei Wälzlagerringe an deren hohlkörperseitigen Stirnflächen 6b führen.

Der Vorsprung kann wie bereits erwähnt alternativ am Außenumfang des Drehkörpers 1 angeordnet sein. In diesem Fall ragt er radial nach außen und ist durch zwei innere Wälzkörperlaufflächen 1a in axialer Richtung entlang der Hohlkörperachse 2x gesehen begrenzt. Die die äußeren Wälzkörperlaufflächen 2a als jeweils erste Nutwandung und die beiden unmittelbar zueinander benachbarten Stützflächen 2b als jeweils verbleibende Nutwandung aufweisenden V-(Kehl-)nuten sind am Hohlkörper 2 angeordnet.

Beispielsweise kann vorgesehen sein, dass:
- am Außenumfang eines durch den Drehkörper 1 gebildeten Innenrings, bei dem es sich beispielsweise um ein Ausgangsorgan eines Getriebes 01 handeln kann, ein radial nach außen ragender Vorsprung mit zwei konzentrisch zur Zylinderachse in entgegengesetzten Richtungen geneigt angeordneten, in Bezug auf die Zylinderachse axial zueinander versetzten inneren Kegelstumpfmantelflächen als innere Wälzkörperlaufflächen 1a ausgebildet ist, welche geneigt angeordneten inneren Wälzkörperlaufflächen 1a zwischen sich einen Winkel von 75° bis 105°, bevorzugt von 90°, einschließen, und auf denen die Wälzkörper 6 zweier Wälzlagerringe am Drehkörper 1 abwälzen (Lageranordnungen 02.5, 02.6, 02.7, 02.8, 02.9, 02.11, 02.15, 02.16, 02.17, 02.19; Fig. 1-G, Fig. 6-G, Fig. 11-L, Fig. 12-L, Fig. 13-L, Fig. 14-L, Fig. 15-L, Fig. 15a-L, Fig. 15b-L, Fig. 17-L, Fig. 23-L, Fig. 24-L, Fig. 25-L, Fig. 27-L, Fig. 27a)-L, Fig. 27b)-L, Fig. 27c)-L),
- am Innenumfang eines durch den Hohlkörper 2 gebildeten, hohlzylinderförmigen Außenrings, bei dem es sich beispielsweise um ein Gehäuse eines Getriebes 01 handeln kann, zwei entlang der mit der Hohlkörperachse 2x übereinstimmenden Zylinderachse axial voneinander beabstandete V-(Kehl-)nuten eingelassen sind, von denen jeweils eine der Kehlnutwandungen eine von insgesamt zwei den inneren Wälzkörperlaufflächen 1a gegenüberliegenden äußeren Kegelstumpfmantelflächen als äußere Wälzkörperlaufflächen 2a bildet, auf denen die Wälzkörper 6 der zwei Wälzlagerringe am Hohlkörper 2 abwälzen,
- die je V-(Kehl-)Nut am Drehkörper 1 jeweils verbleibende Kehlnutwandung eine von insgesamt zwei zu den äußeren Wälzkörperlaufflächen 2a benachbarten Stützflächen 2b bildet, welche die Wälzkörper 6 der zwei Wälzlagerringe an deren hohlkörperseitigen Stirnflächen 6b führen,
- in axialer Richtung beidseitig des Vorsprungs ein Wälzlagerring zwischen den jeweiligen inneren und äußeren Wälzkörperlaufflächen 1a, 2a angeordnet ist, und
- in axialer Richtung beidseitig der Wälzlagerringe jeweils ein die Wälzlagerelemente der Wälzlagerringe in ihrer Position auf den Wälzkörperlaufflächen 1a, 2a haltender Stützring 3, 4 angeordnet ist, und
- auf den dem Vorsprung zugewandten Stirnseiten der Stützringe 3, 4 jeweils eine Stützfläche 3b, 4b ausgebildet ist, welche die Wälzkörper 6 der zwei Wälzlagerringe an deren drehkörperseitigen Stirnflächen 6b führen.

Jeder Wälzlagerring der Hohl-Drehkörper-Lageranordnung 02 kann aus abwechselnd Wälzkörper 6 und Separatoren 7 umfassenden Wälzlagerelementen bestehen.

Die Stützringe 3, 4 können beide am Hohlkörper 2 oder beide am Drehkörper 1 angeordnet sein.

Zur Erhöhung der Montagefreundlichkeit kann alternativ ein Stützring 3, 4 am Hohlkörper 2 und der andere Stützring 4, 3 am Drehkörper 1 angeordnet sein.

Vorteilhaft sind die den Vorsprung in axialer Richtung begrenzenden und die ersten Wälzkörperlaufflächen 1a, 2a bildenden, in Bezug auf die Hohlkörperachse 2x axial zueinander versetzten und in entgegengesetzten Richtungen geneigt angeordneten ersten Kegelstumpfmantelflächen unter einem eingeschlossenen Winkel von 75° bis 105° unmittelbar benachbart.

Dies erlaubt bei einem eingeschlossenen Winkel von beispielsweise 90° die Verwendung von Zylinderrollen als Wälzkörper 6 eines oder beider Wälzlagerringe, und bei einem beispielsweise hiervon abweichenden Winkel die Verwendung von Kegelrollen als Wälzkörper 6 eines oder beider Wälzlagerringe.

Hiernach können die Wälzkörper 6 zumindest eines Wälzlagerrings als Zylinderrollen ausgebildet sein. Dabei verlaufen die jeweils dem selben Wälzlagerring zugeordneten ersten, beispielsweise inneren oder äußeren Wälzkörperlaufflächen 1a, 2a und zweiten, beispielsweise äußeren oder inneren Wälzkörperlaufflächen 2a, 1a parallel zueinander.

Alternativ können die Wälzkörper 6 zumindest eines Wälzlagerrings als Kegelrollen ausgebildet sein. Hierbei schließen die jeweils dem selben Wälzlagerring zugeordneten ersten, beispielsweise inneren oder äußeren Wälzkörperlaufflächen 1a, 2a und zweiten, beispielsweise inneren oder äußeren Wälzkörperlaufflächen 2a, 1a einen dem Öffnungswinkel des Ergänzungskegels zum Kegelstumpf der Kegelrollen entsprechenden Winkel ein.

Die Wälzkörper können hiernach als Zylinder- oder als Kegelrollen ausgebildet sein. Dementsprechend verlaufen die dem selben Wälzlagerring zugeordneten ersten Wälzkörperlaufflächen und zweiten Wälzkörperlaufflächen parallel zueinander, oder sie schließen einen dem Öffnungswinkel des Ergänzungskegels zum Kegelstumpf der Kegelrollen entsprechenden Winkel ein.

Wichtig ist hervorzuheben, dass die V-(Kehl-)Nuten der Hohl-Drehkörper-Lageranordnung 02 jeweils Flächen aufspannen, auf denen die Zylinder- beziehungsweise Hohlkörperachse 2x normal aufsteht.

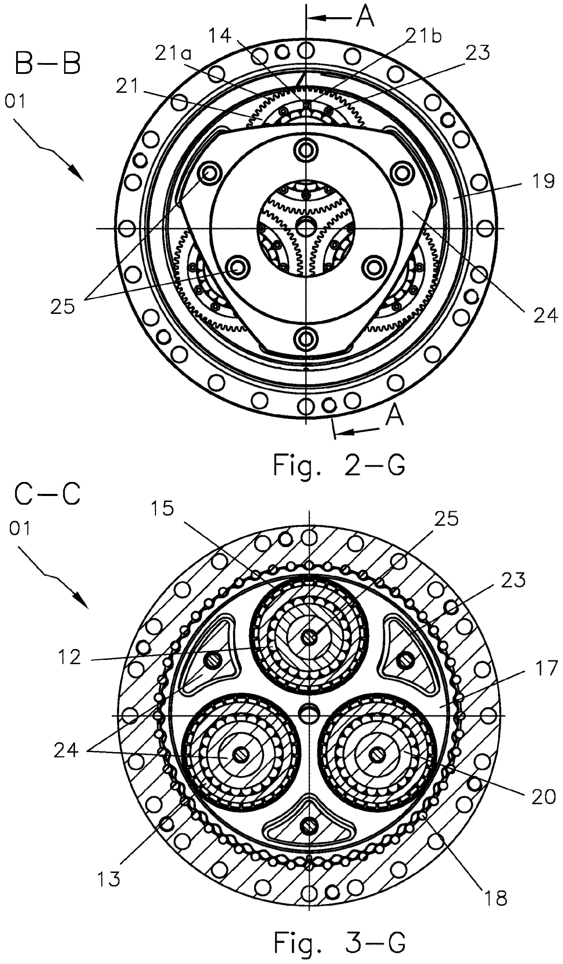

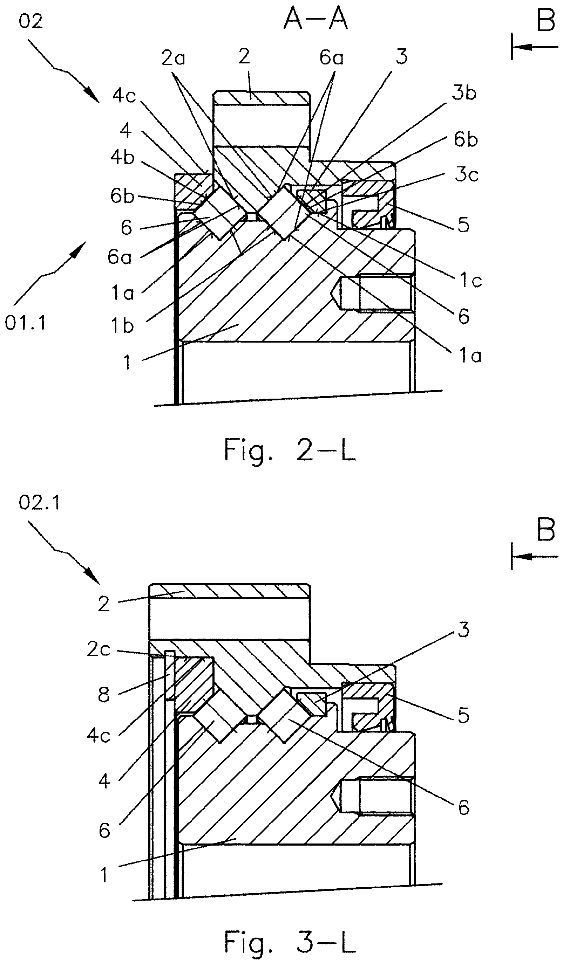

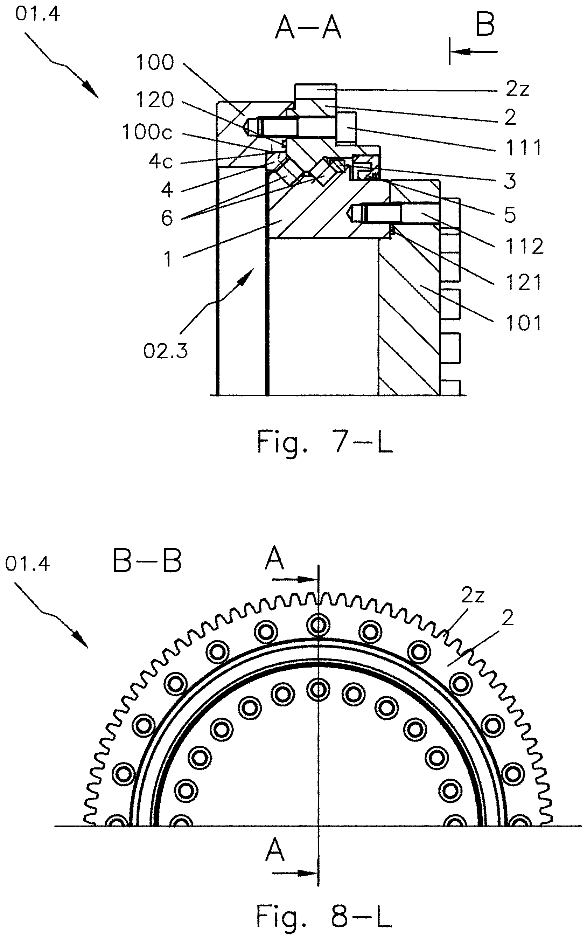

Die Hohl-Drehkörper-Lageranordnung 02 kann in verschiedene Bauvorrichtungen integriert werden, wie anhand der in den Zeichnungen Fig. 1-G, Fig. 5-G, Fig. 6-G, Fig. 8-G, Fig. 9-G, Fig. 13-G, Fig. 14-G, Fig. 15-G sowie in den Fig. 7-L bis Fig. 10-L ganz oder teilweise dargestellten Getrieben 01, 01.1 beziehungsweise Strukturen 01.4 und 01.5 beispielhaft gezeigt. Der Aufbau einer in Fig. 1-L und Fig. 2-L gezeigten Hohl-Drehkörper-Lageranordnung 02 mit zwei Wälzlagerringen mit Schrägkontakt zeichnet sich dadurch aus, dass sein Aufbau zusätzliche Stützringe 3, 4 enthält, die frei von Wälzkörperlaufflächen ausgeführt sind. Die Hohl-Drehkörper-Lageranordnung 02 ermöglicht eine übersichtliche und vereinfachte Montage mit beispielsweise Wälzkörpern 6 und Separatoren 7 umfassenden Wälzlagerelementen als Ganzes.

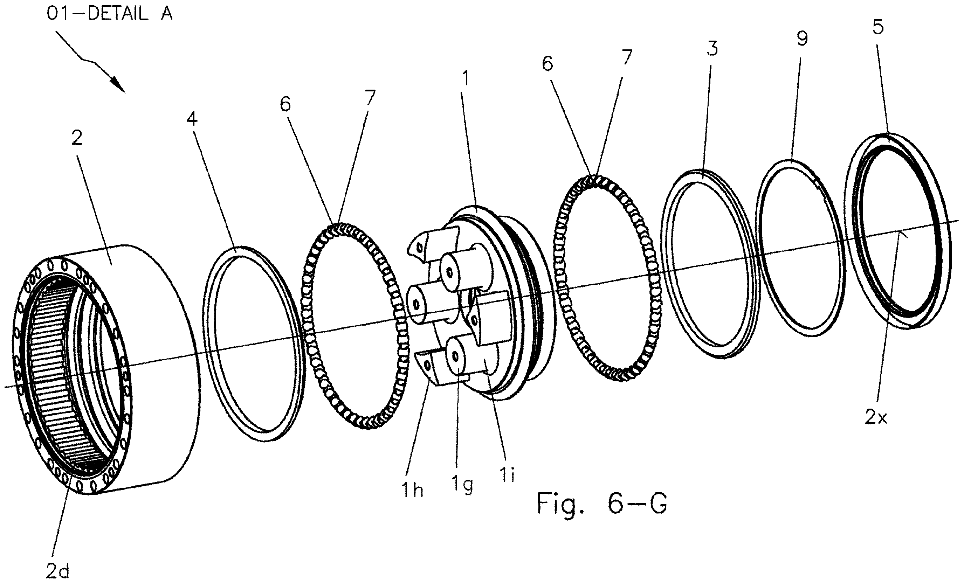

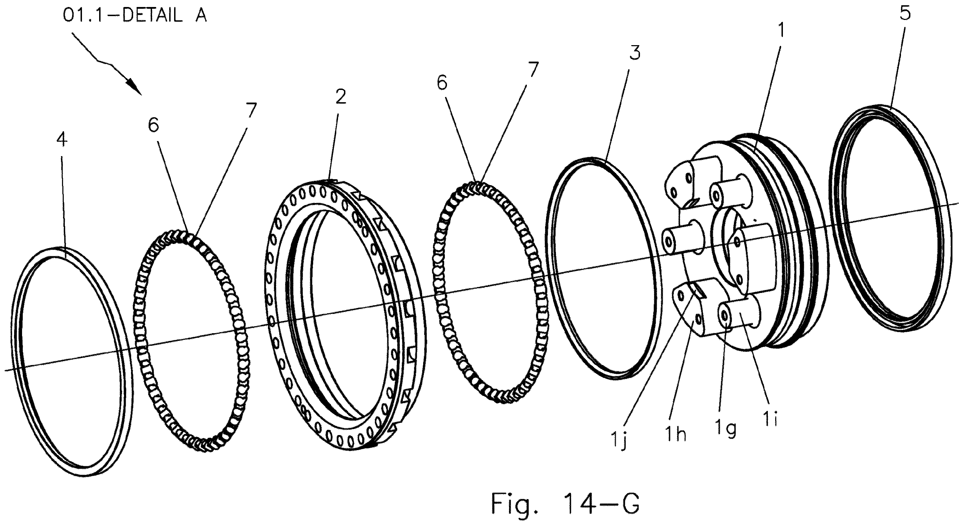

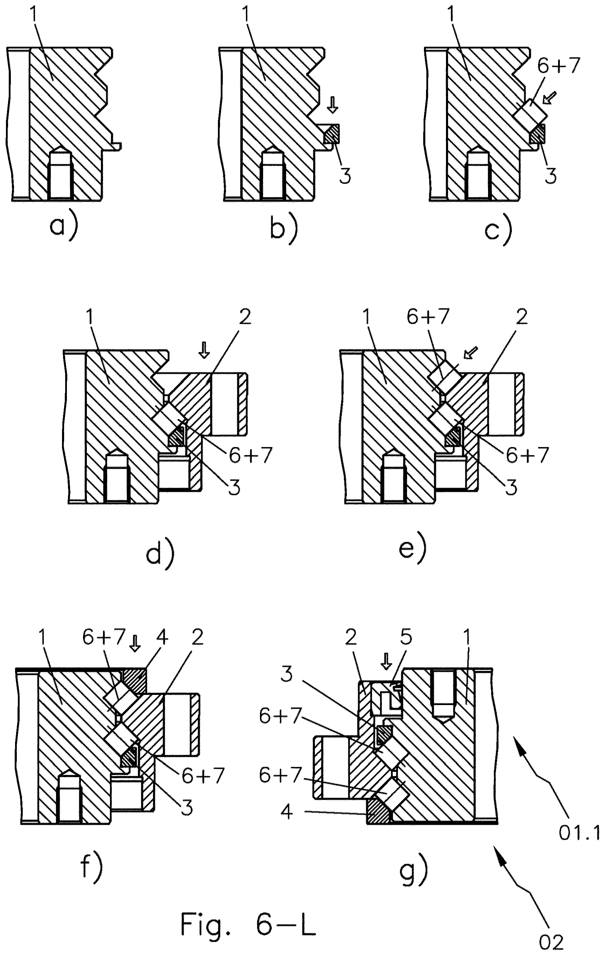

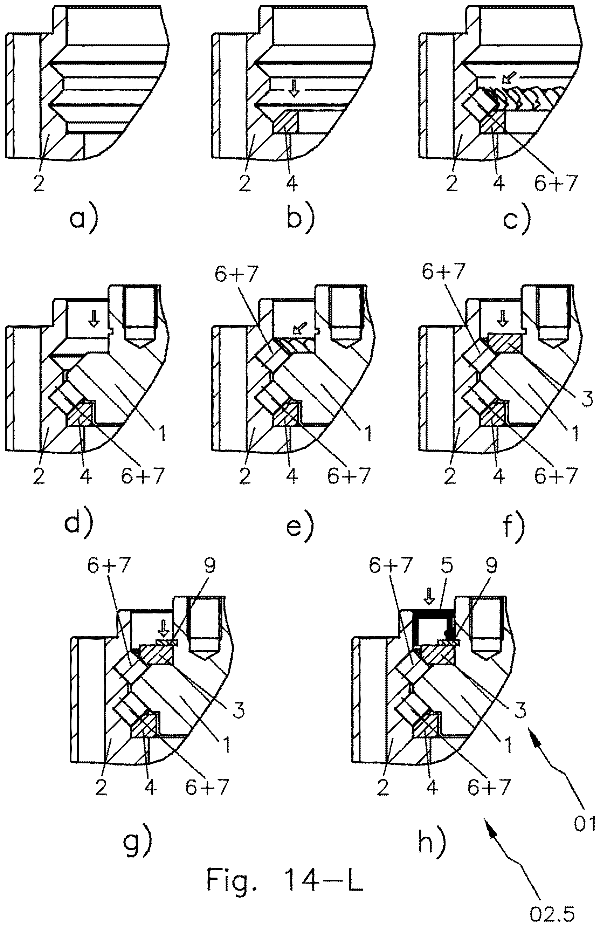

In Fig. 6-L a) bis g) und in Fig. 14-L a) bis h) ist jeweils Schritt für Schritt ein Zusammenbau einer Hohl-Drehkörper-Lageranordnung 02 (Fig. 6-L) und 02.5 (Fig. 14-L) veranschaulicht. Neben einer Vereinfachung der Montage und Demontage verhindert der erfindungsgemäße Zusammenbau der Hohl-Drehkörper-Lageranordnung 02 Orientierungsfehler der Wälzkörper 6 sowie der gegebenenfalls zwischen den Wälzkörpern 6 angeordneten, beispielsweise als Trennstege ausgeführten Separatoren 7.

Gleichzeitig ist es möglich, die Hohl-Drehkörper-Lageranordnung 02 beim Zusammenbau als Ganzes entweder mit Spiel, ohne Vorspannung, mit geringerer oder größerer Vorspannung zu montieren.

Wie bereits erwähnt ist es darüber hinaus möglich, einen Wälzlagerring nach dem anderen zu demontieren, indem der jeweilige gesamte Wälzlagerring aus beispielsweise Wälzkörper 6 und Separatoren 7 umfassenden Wälzlagerelementen am Stück entfernt wird, der sich auf der Seite des zusätzlichen Stützrings 4 befindet (Fig. 1-L bis Fig. 8-L, Fig. 11-L bis Fig. 15-L, Fig. Fig. 20-L bis Fig. 27-L, Fig. 26c)-L und Fig. 27c)-L).

Die wesentlichen Vorteile der genannten Hohl-Drehkörper-Lageranordnung 02 nach Fig. 1-L bis Fig.6-L sind:
1.) Ein optisch übersichtlicher und vereinfachter Einbau mit guter Zugänglichkeit zum Einsetzen von Wälzkörpern 6 und Separatoren 7.
2.) Eine gute Zugänglichkeit zum Einsetzen von Wälzkörpern 6 und Separatoren 7 zwischen die durch den Drehkörper 1 und den Hohlkörper 2 gebildeten Lagerorgane und zwischen die Stützringe 3, 4, frei von Beschickungslöchern in den Lagerorganen.
3.) Die Lagerorgane sind frei von Beschickungslöchern ausgeführt.
4.) Die Hohl-Drehkörper-Lageranordnung kann durch Wärmebeaufschlagung eines Lagerorgans wahlweise mit Spiel, ohne Vorspannung oder mit Vorspannung montiert werden.
5.) Eine vereinfachte Demontage der Hohl-Drehkörper-Lageranordnung.
6.) Die Stützringe 3, 4 erfordern weder eine hohe Fertigungsgenauigkeit, noch eine genaue Positionierung bei der Montage, weil sie die Wälzkörper 6 nur an ihren Stirnflächen 6b führen (senkrecht zur Rollrichtung der Wälzkörper 6).
7.) Die beiden Stützringe 3, 4 benötigen lediglich eine erhöhte Oberflächenhärte an der Berührungsstelle mit den Stirnflächen 6b der Wälzkörper 6, da sie diese nur in einer Richtung senkrecht zur Wälzrichtung der Wälzkörper 6 führen.
8.) Die beiden Stützringe 3, 4 weisen somit keine Wälzkörperlaufflächen auf und es ist zu ihrer Herstellung kein Einsatz von hochwertigem Lagermaterial und entsprechender Wärmebehandlung und Fertigung erforderlich.
9.) Die Vorteile Ziffer 6.) 7.) und 8.) definieren die Bedingungen für eine deutlich vereinfachte Fertigung mit geeigneter Fertigungstechnik der Stützringe 3, 4 im Vergleich zu klassischen Lagerringen mit Lagerlaufbahnen.

Bei einer in Fig. 1-L und Fig. 2-L dargestellten Lageranordnung 02 ist der in axialer Richtung parallel zur Hohlkörperachse 2x gesehen beidseitig durch Wälzkörperlaufflächen 2a begrenzte Vorsprung am Innenumfang des Hohlkörpers 2 vorgesehen. Die Lageranordnung 02 umfasst unter einem Winkel von 45° ausgebildete Wälzkörperlaufflächen 2a am Hohlkörper 2. Auf den Wälzkörperlaufflächen 2a rollen die Wälzkörper 6 am Hohlkörper 2 ab. Die Lageranordnung 02 umfasst ebenfalls unter einem Winkel von 45° ausgebildete Wälzkörperlaufflächen 1 am Drehkörper 1. Auf den Wälzkörperlaufflächen 1a rollen die Wälzkörper 6 am Drehkörper 1 ab. Die Stirnflächen 6b der Wälzkörper 6 werden beim Abrollen durch Stützflächen 1b am Drehkörper 1 und durch an den Stützringen 3, 4 ausgebildete Stützflächen 3b, 4b geführt.

Die Stützflächen 3b und 4b ergänzen die beiden Wälzkörperlaufflächen 1a am Drehkörper 1 zu jeweils zweigeteilten V-(Kehl-)Nuten.

Die Stützringe 3, 4 weisen daher an ihren in Richtung senkrecht zur Abrollrichtung der Wälzkörper 6 orientierten, in Kontakt mit den Stirnflächen 6b der Wälzkörper 6 gelangenden Stützflächen 3b, 4b vorteilhaft lediglich eine erhöhte Oberflächenhärte auf.

Die Stützringe 3, 4 weisen weder Wälzkörperlaufflächen auf, noch werden für sie hohe Anforderungen an die Passgenauigkeit gestellt. Für ihre Herstellung genügt daher eine ausreichende Material- und Wärmebehandlung bzw. eine ausreichende Fertigungsgenauigkeit, was gegenüber der Herstellung vollwertiger klassischer Lagerringe wesentlich einfacher und kostengünstiger ist.

Vorteilhaft weist der Stützring 3 eine Fläche 3c zu dessen Ausrichtung gegenüber einem Sitz 1c am Drehkörper 1 auf.

Alternativ oder zusätzlich kann der Stützring 4 eine Fläche 4c zu dessen Ausrichtung gegenüber einem Sitz 1c am Drehkörper 1 aufweisen.

An den Flächen 3c und 4c benötigen die Stützringe 3, 4 lediglich eine angemessene Passgenauigkeit in Bezug auf den jeweiligen Sitz 1c am Drehkörper.

Die in einer Schritt-für-Schritt Abfolge ihrer Montage in Fig. 6-L dargestellte Lageranordnung 02 kann zwischen dem einen auch als Lageraußernring bezeichneten äußeren Lagerring bildenden Drehkörper 1 und dem einen auch als Lagerinnenring bezeichneten innerem Lagerring bildenden Hohlkörper 2 mindestens eine Dichtung 5 aufweisen.

Die in Fig. 1-L, Fig. 2-L und Fig. 6-L dargestellte Lageranordnung 02 kann nach dem Entfernen der Dichtung 5 in umgekehrter Reihenfolge wie in Fig. 6-L dargestellt demontiert werden, beginnend mit dem Stützring 4 und dem zu diesem benachbarten Wälzlagerring.

Wichtig ist hervorzuheben, dass die als besonderer Vorteil gegenüber dem Stand der Technik hervorzuhebende einfache Demontierbarkeit auch für alle anderen in diesem Dokument beschriebenen Hohl-Drehkörper-Lageranordnungen 02 zutrifft.

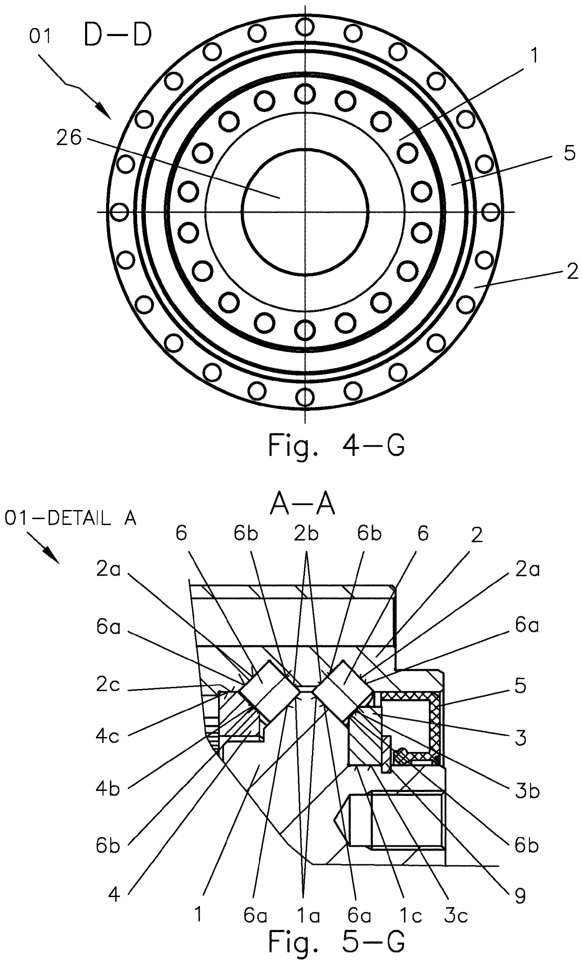

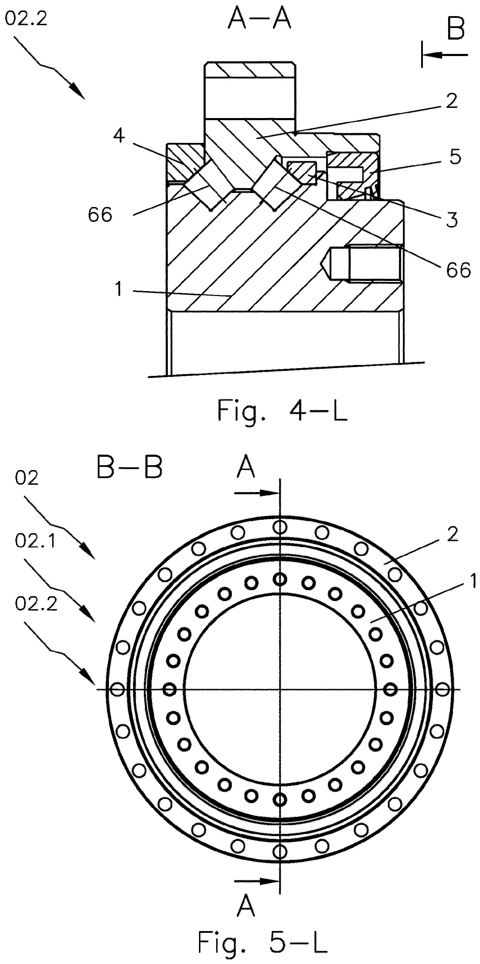

Bei der in Fig. 3-L und Fig 5-L gezeigten Lageranordnung 02.01 weist der Stützring 4 eine Fläche 4c zu dessen Ausrichtung gegenüber einem am Hohlkörper 2 ausgebildeten Sitz 2c auf. Der Stützring 4 ist bei der Lageranordnung 02.01 durch einen in eine Nut am Innenumfang des Hohlkörpers 2 eingreifenden inneren Sprengring 8 gesichert.

Die in Fig. 3-L und Fig 5-L gezeigte Lageranordnung 02.02 weist Wälzlagerringe mit Kegelrollen 66 anstelle von zylinderförmigen Wälzkörpern 6 auf. Dementsprechend verlaufen die einander am Drehkörper 1 und am Hohlkörper 2 gegenüberliegenden, dem selben Wälzlagerring mit Kegelrollen 66 zugeordneten Wälzkörperlaufflächen 1a und 2a nicht parallel zueinander. Stattdessen schneiden sich die durch die einander gegenüberliegenden Wälzkörperlaufflächen 1a und 2a aufgespannten Flächen. Dabei schließen die einander gegenüberliegenden Wälzkörperlaufflächen 1a und 2a einen Winkel zwischen sich ein.

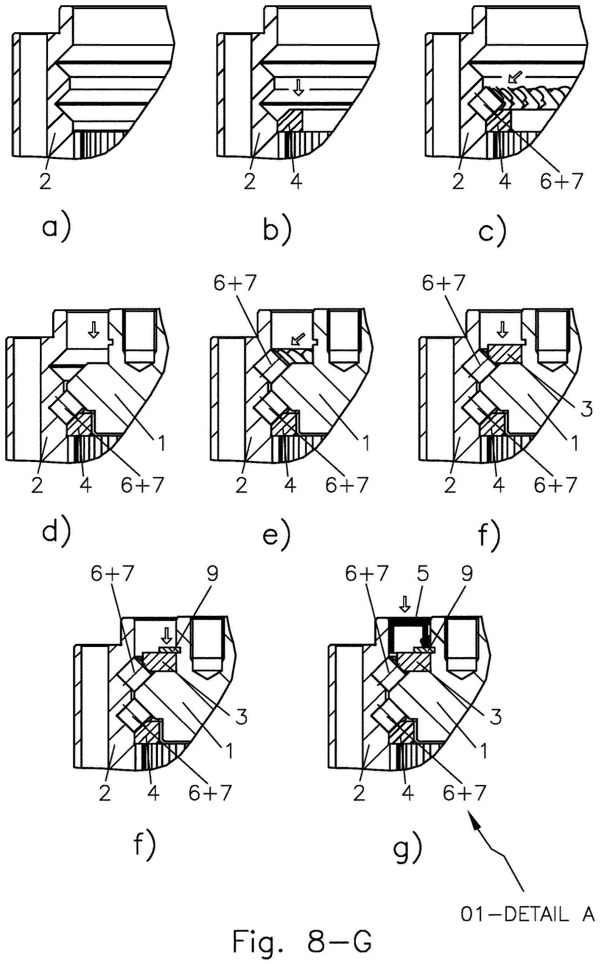

Bei der in eine in Fig. 7-L und Fig. 8-L dargestellte, beispielsweise einen Teil eines Getriebes 01.4 bildende Struktur eingesetzten Lageranordnung 02.3 ist der Hohlkörper 2 an seinem Außenumfang mit einer Außenverzahnung 2z versehen. Die Lageranordnung 02.3 weist einen Stützring 4 auf, der mit seiner vorzugsweise als Passung ausgeführten Fläche 4c auf einem ebenfalls bevorzugt als Passung ausgebildeten Sitz 100c eines Flanschs 100 angeordnet ist. Der Hohlkörper 2 ist mit beispielsweise als Schrauben 111 ausgeführten Verbindungsmitteln mit dem Flansch 100 verbunden. Zwischen dem Flansch 100 und dem Hohlkörper 2 kann ein O-Ring 120 angeordnet sein. Ein zweiter Flansch 101 kann am Drehkörper 1 angeordnet sein. Beispielsweise als Schrauben 112 ausgeführte Verbindungsmittel können zur Verbindung des zweiten Flanschs 101 mit dem Drehkörper 1vorgesehen sein. Zwischen dem Flansch 101 und dem Drehkörper 1 kann ein O-Ring 121 angeordnet sein.

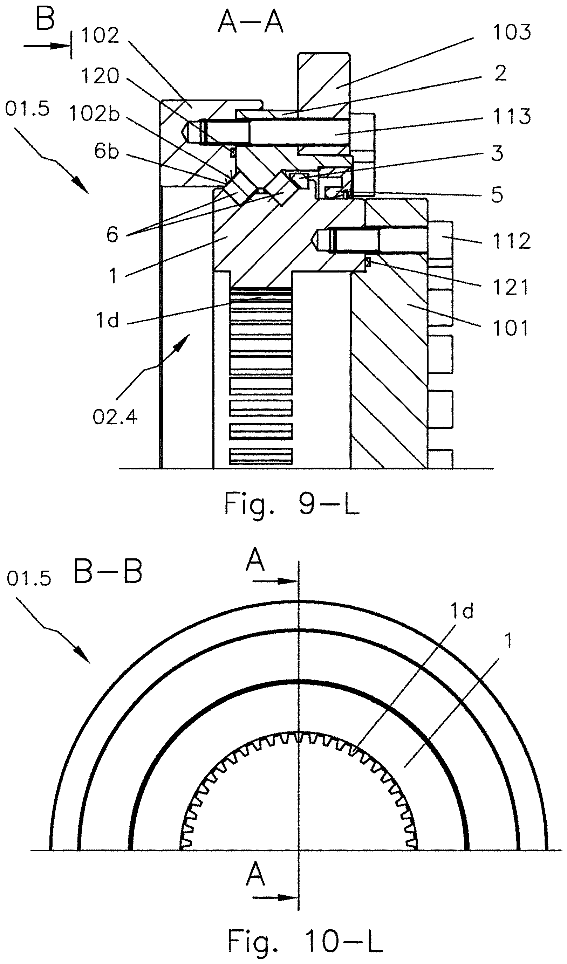

Bei der in eine in Fig. 9-L und Fig. 10-L dargestellte, beispielsweise einen Teil eines Getriebes 01.5 bildende Struktur eingesetzten Lageranordnung 02.4 ist der Drehkörper 1 als Hohlwelle ausgeführt. Am Innenumfang des Drehkörpers 1 ist eine Innenverzahnung 1d ausgebildet. Diese dient dem Einsatz in Maschinen. Ein mit dem Hohlkörper 2 verbundener Flansch 102 weist eine direkt ausgebildete Stützfläche 102b zur Führung der Stirnflächen 6b der Wälzkörper 6 auf. Bei der Lageranordnung 02.4 ersetzt oder übernimmt der Flansch 102 die Funktion eines Stützrings 4. Der Hohlkörper 2 und der Flansch 102 sind gemeinsam an einem Maschinengestell 103 angeordnet. Eine der gemeinsamen Verbindung von Hohlkörper 2, Flansch 102 und Maschinengestell 103 kann mittels als Schrauben 113 ausgeführter Verbindungsmittel ausgeführt sein. Ein O-Ring 120 kann zur Abdichtung der Verbindung zwischen Flansch 102 und Hohlkörper 2 eingesetzt sein. Am Drehkörper 1 kann ein Flansch 101 beispielsweise mit als Schrauben 112 ausgeführten Verbindungsmitteln befestigt sein.

Ein O-Ring 121 kann zur Abdichtung der Verbindung zwischen Flansch 101 und Drehkörper 1 eingesetzt sein.

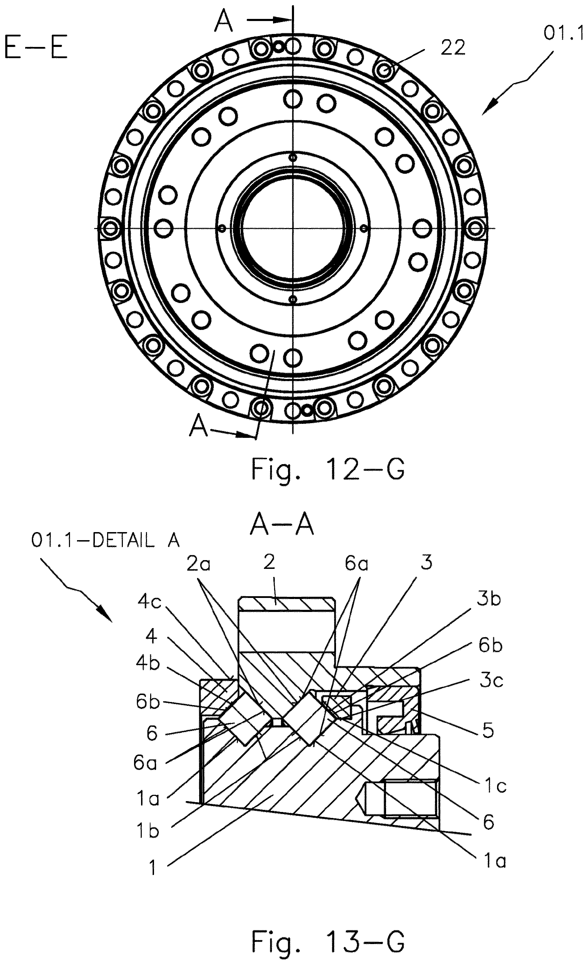

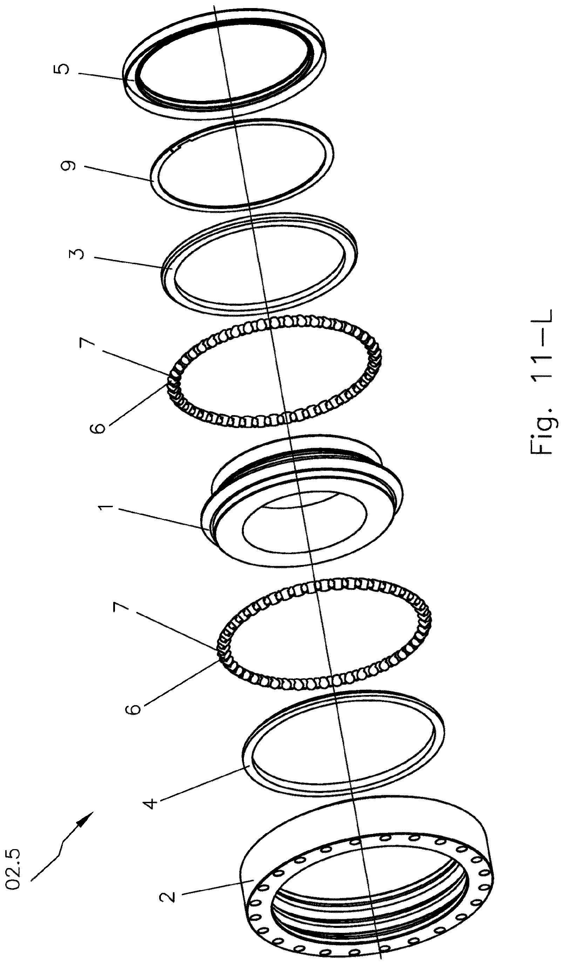

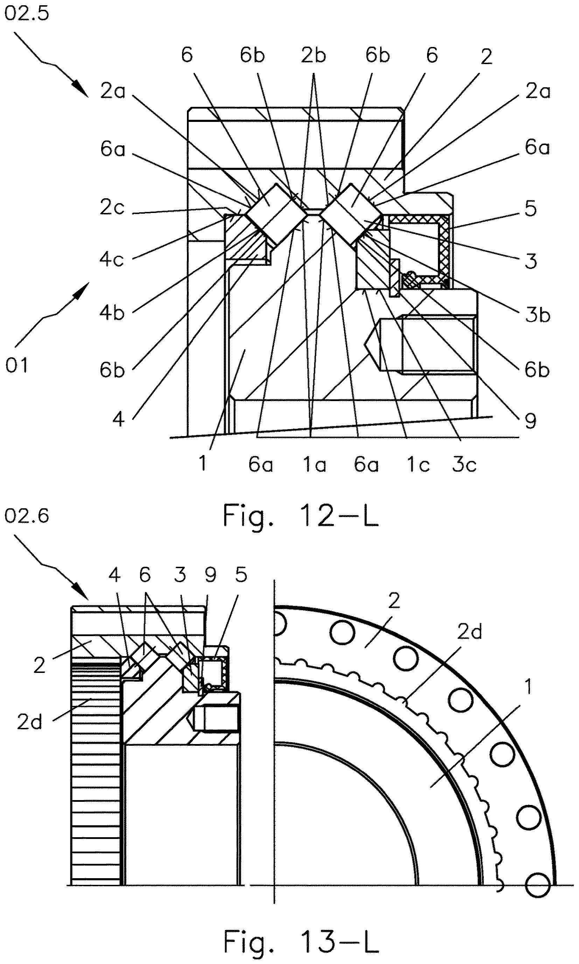

Bei einer in Fig. 11-L und Fig. 12-L gezeigten Lageranordnung 02.5 ist der in axialer Richtung parallel zur Hohlkörperachse 2x gesehen beidseitig durch Wälzkörperlaufflächen 1a begrenzte Vorsprung am Außenumfang des Drehkörpers 1 vorgesehen. Die Lageranordnung 02.5 weist unter einem Winkel von 45° ausgebildete Wälzkörperlaufflächen 1a am den inneren Lagerring bildenden Drehkörper 1 und diesen gegenüberliegend und ebenfalls um 45° geneigt ausgebildete Wälzkörperlaufflächen 2a am den Lageraußenring bildenden Hohlkörper 2 auf. Auf jeweils einem Laufflächenpaar aus einer Wälzkörperlauffläche 1a am Drehkörper 1 und einer dieser gegenüberliegenden Wälzkörperlauffläche 2a am Hohlkörper 2 rollen die Wälzkörper 6 je eines der beiden Wälzlagerringe ab. Die Wälzkörper 6 werden an je einer ihrer Stirnflächen 6b durch Stützflächen 2b am Hohlkörper geführt. An den jeweils gegenüberliegenden Stirnflächen 6b werden die Wälzkörper 6 des einen Wälzlagerrings von an dem einen Stützring 3 angeordneten Stützflächen 3b, und die Wälzkörper 6 des anderen Wälzlagerrings von an dem anderen Stützring 4 angeordneten Stützflächen 4b geführt. Am Stützring 3 ist vorteilhaft eine Fläche 3c ausgebildet, mit der er auf einem am Drehkörper 1 ausgebildeten Sitz 1c angeordnet ist. Ein Sprengring 9 kann der axialen Sicherung des Stützrings 3 dienen. Die Stützflächen 3b und 4b ergänzen die beiden Wälzkörperlaufflächen 2a am Hohlkörper 2 zu jeweils zweigeteilten V-(Kehl-)Nuten.

Der Ablauf einer Montage der Lageranordnung 02.5 aus Fig. 11-L und Fig. 12-L ist in Fig. 14-L Schritt-für-Schritt beginnend mit Fig. 14-L a) und endend mit Fig. 14-L h) dargestellt. Die optisch übersichtliche und damit besser kontrollierbare, besser automatisierbare und vereinfachte Montage stellt eine gute Zugänglichkeit zum Einsetzen der Wälzkörper 6 und gegebenenfalls beispielsweise als Trennstege ausgeführte Separatoren 7 als Wälzlagerelemente der beiden zwischen dem Drehkörper 1 und dem Hohlkörper 2 angeordneten und in axialer Richtung durch die beiden Stützringe 3, 4 gesicherten Wälzlagerringe sicher. Wahlweise kann eine Dichtung 5 eingebaut werden. Beschickungslöcher werden nicht benötigt. Die Wälzlagerringe können am Stück eingesetzt werden. Außerdem können sie im Gegensatz zum Stand der Technik, bei dem die Wälzlagerelemente der Wälzlagerringe eins nach dem anderen durch Beschickungslöcher (Bezugszeichen 41 in Fig. 17-G und Fig. 18-G) zeitaufwändig zwischen die Lagerorgane Drehkörper 1 und Hohlkörper 2 eingesetzt und gegebenenfalls, z.B. bei Fehlausrichtung, noch um ein Vielfaches zeitaufwändiger wieder entnommen werden müssen.

Bei der in Fig. 13-L dargestellten Lageranordnung 02.6 mit dem Vorsprung am Außenumfang des Drehkörpers 1, kann der Hohlkörper 2 mit einer durch Nuten 2d gebildeten Innenverzahnung versehen, oder durch das Einarbeiten von zur Einlegung von als Zähne dienenden Wälzkörpern 18 geeigneten Nuten 2d für eine Innenverzahnung vorbereitet sein. Dies kann beispielsweise für den Einsatz in Maschinen vorteilhaft sein.

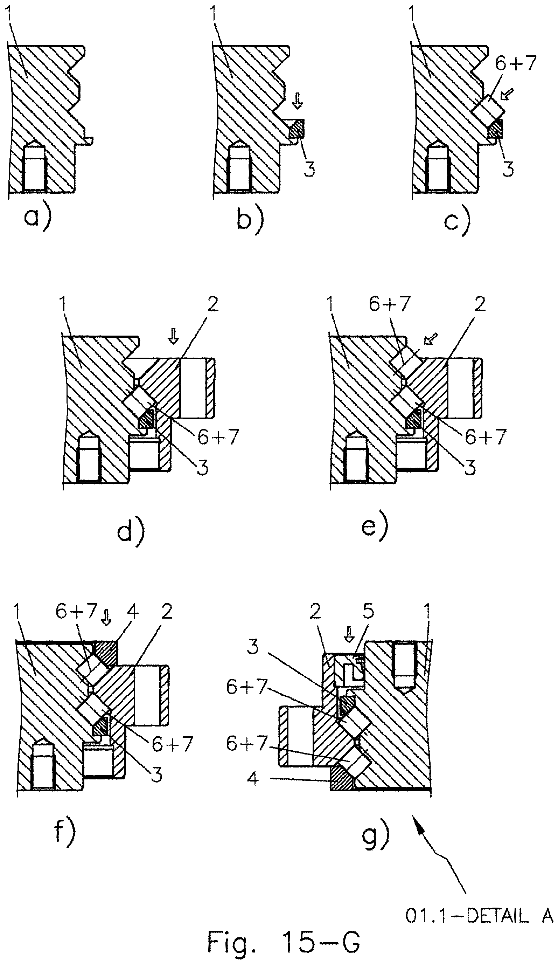

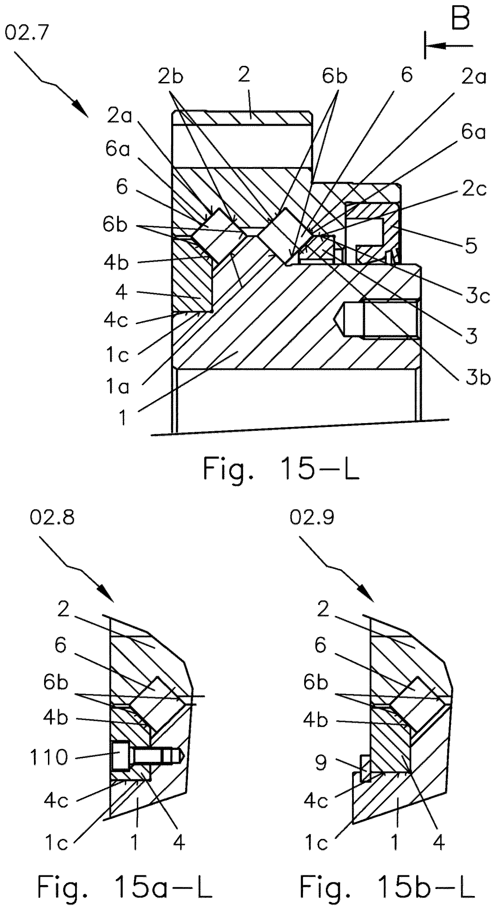

Bei der in Fig. 15-L dargestellten, den Vorsprung ebenfalls am Außenumfang des Drehkörpers 1 aufweisenden Lageranordnung 02.7 sind am Innenumfang des Hohlkörpers 2 Wälzkörperlaufflächen 2a und zu diesen benachbarte Stützflächen 2b für die hohlkörperseitig orientierten Stirnflächen 6b der Wälzkörper 6 ausgebildet. An den Stützringen 3, 4 sind Stützflächen 3b, 4b für die drehkörperseitig orientierten Stirnflächen 6b der Wälzkörper 6 ausgebildet. Am Außenumfang des Stützrings 3 ist eine Fläche 3c ausgebildet, mit der der Stützring 3 auf einem Sitz 2c am Hohlkörper 2 angeordnet ist. Der Stützring 4 weist eine an seinem Innenumfang ausgebildete Fläche 4c auf, mit der er auf einem Sitz 1c am Drehkörper 1 angeordnet ist. Die Stützringe 3, 4 sind dabei auf den jeweiligen Sitz 1c, 2c aufpressbar, aufklebbar oder aufsteckbar. Alternativ oder zusätzlich können die Stützringe 3, 4 in der Konstruktion der Vorrichtung, in welche die Lageranordnung 02.7 zum Einbau vorgesehen ist, gegen axiale Bewegung gesichert sein, um mit ihren Stützflächen 3b, 4b die Wälzkörper 6 an deren Stirnflächen 6b zu führen.

Bei der in Fig. 15a-L dargestellten Lageranordnung 02.08 weist der Stützring 4 an seinem Innenumfang die Fläche 4c auf, mit der er an einem Sitz 1c am Drehkörper 1 angeordnet wird. Der Stützring 4 ist mit beispielsweise als Schrauben 110 ausgeführten Verbindungsmitteln gegen Abrutschen in axialer Richtung parallel zur Hohlkörperachse 2x gesichert.

Bei der in Fig. 15b-L dargestellten Lageranordnung 02.09 ist der Stützring 4 mit einem Sprengring 9 gegen Abrutschen in axialer Richtung parallel zur Hohlkörperachse 2x gesichert.

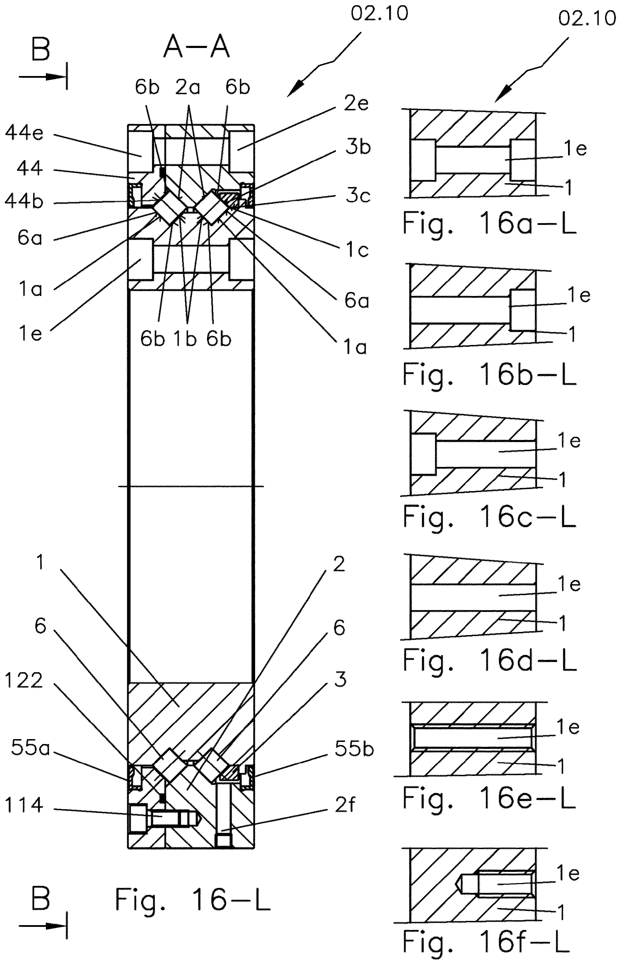

Bei einer in Fig. 16-L dargestellten Lageranordnung 02.10 ist der in axialer Richtung parallel zur Hohlkörperachse 2x durch die um 45° in entgegengesetzten Richtungen geneigten Wälzkörperlaufflächen 2a begrenzte Vorsprung wiederum am Innenumfang des Hohlkörpers 2 vorgesehen. Ein Stützring 3 ist an seinem Innenumfang mit einer Fläche 3c ausgebildet, mit der er an einem Sitz 1c am Drehkörper 1 angeordnet ist. Am Stützring 3 ist eine die Wälzkörper 6 des in Fig. 16-L rechten Wälzlagerrings an deren dem Hohlkörper 2 zugewandten Stirnflächen 6b führende Stützfläche 3b ausgebildet. Ein mit einer die dem Hohlkörper 2 zugewandten Stirnflächen 6b der Wälzkörper des in Fig. 16-L linken Wälzlagerrings führenden Stützfläche 44b versehener Stützring 44 ist stirnseitig am Hohlkörper 2 angeordnet.

Der Stützring 44 kann mit beispielsweise Schrauben 114 umfassenden Verbindungsmitteln stirnseitig am Hohlkörper 2 befestigt sein. Ein O-Ring 122 kann zur Abdichtung der Verbindung zwischen Hohlkörper 2 und Stützring 44 eingebracht sein.

Die Lageranordnung 02.10 kann vollständig abgedichtet ausgeführt sein, indem beispielsweise zusätzlich zu dem zwischen dem Stützring 44 und dem Hohlkörper 2 angeordneten O-Ring 122 eine Dichtung 55a zwischen dem Stützring 44 und dem Drehkörper 1 und eine Dichtung 55b zwischen dem Hohlkörper 2 und dem Drehkörper 1 angeordnet ist.

Der Stützring 44 und der Hohlkörper 2 können Löcher 44e, 2e aufweisen, die dazu vorgesehen sein können, die Lageranordnung 02.10 als Ganzes mit beispielsweise Schrauben umfassenden Verbindungsmitteln während ihres Einbaus in eine beispielsweise einen Teil eines Getriebes bildende oder ein Getriebe ganz oder zum Teil umfassende Vorrichtung zu fixieren.

Die Lageranordnung 02.10 kann alternativ oder zusätzlich Löcher 1e am Drehkörper 1 aufweisen, die dazu vorgesehen sein können, die Lageranordnung 02.10 als Ganzes mit beispielsweise Schrauben umfassenden Verbindungsmitteln während ihres Einbaus in eine beispielsweise einen Teil eines Getriebes bildende oder ein Getriebe ganz oder zum Teil umfassende Vorrichtung zu fixieren.

Verschiedene Ausgestaltungen solcher Löcher 1e sind in den Fig. 16a-L bis Fig. 16f-L ohne Anspruch auf Vollständigkeit dargestellt. Die beispielsweise am Drehkörper 1 vorgesehenen Löcher 1e können dazu vorgesehen sein, die Lageranordnung 02.10 als Ganzes beim Einbau in eine Vorrichtung gemäß den Abbildungen mit beispielsweise Schrauben umfassenden Verbindungsmitteln zu fixieren. Es können wie dargestellt in:
- Fig. 16a: Löcher 1e mit Aussparungen für Schraubenköpfe von beiden Seiten,
- Fig. 16b: Löcher 1e mit Aussparungen für Schraubenköpfe von der rechten Seite,
- Fig.16c: Löcher 1e mit Aussparungen für Schraubenköpfe von der linken Seite,
- Fig.16d: durchgehende Löcher 1e für Schrauben,
- Fig.16e: als durchgehende Gewindebohrungen ausgeführte Löcher 1e,
- Fig. 16f: als von einer Seite her ausgeführte Gewindebohrungen als Sacklöcher ausgeführte Löcher 1e,
vorgesehen sein.

Wichtig ist hervorzuheben, dass bei allen Hohl-Drehkörper-Lageranordnungen 02 ein Schmierloch 2f beispielsweise am Hohlkörper 2 und/oder am Drehkörper 1 angeordnet sein kann, um die Wälzlagerringe wie bei der in Fig. 16-L dargestellten Lageranordnung 02.10 mit Schmiermittel versorgen zu können oder um den zwischen Drehkörper 1 und Hohlkörper 2 verbleibenden Ringspalt mit Schmiermittel zu füllen.

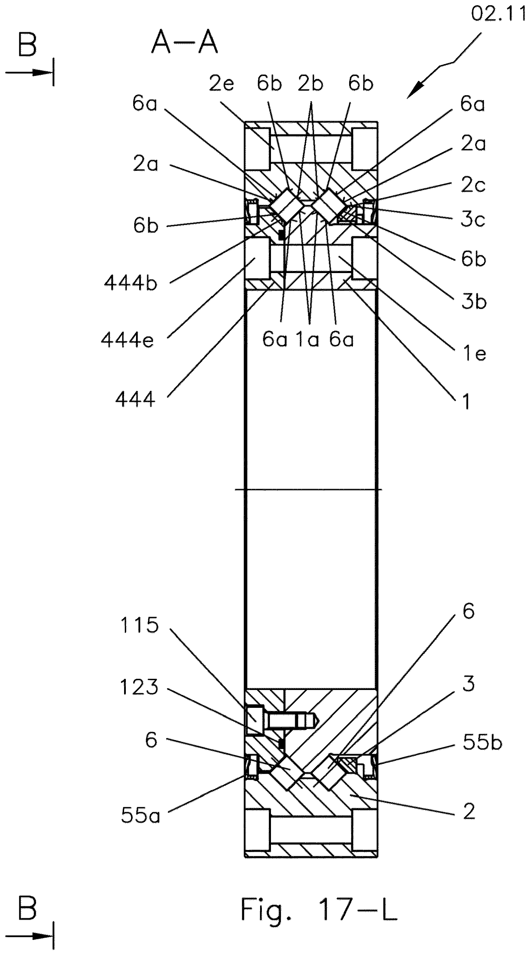

Bei einer in Fig. 17-L dargestellten Lageranordnung 02.11 ist der in axialer Richtung parallel zur Hohlkörperachse 2x durch die um 45° in entgegengesetzten Richtungen geneigten Wälzkörperlaufflächen 1a begrenzte Vorsprung wiederum am Außenumfang des Drehkörpers 1 vorgesehen. Ein Stützring 3 ist an seinem Außenumfang mit einer Fläche 3c ausgebildet, mit der er an einem Sitz 2c am Hohlkörper 2 angeordnet ist. Am Stützring 3 ist eine die Wälzkörper 6 des in Fig. 17-L rechten Wälzlagerrings an deren dem Drehkörper 1 zugewandten Stirnflächen 6b führende Stützfläche 3b ausgebildet. Ein mit einer die dem Drehkörper 1 zugewandten Stirnflächen 6b der Wälzkörper des in Fig. 17-L linken Wälzlagerrings führenden Stützfläche 444b versehener Stützring 444 ist stirnseitig am Drehkörper 1 angeordnet. Der Stützring 444 kann mit beispielsweise Schrauben 115 umfassenden Verbindungsmitteln am stirnseitig am Drehkörper 1 befestigt sein. Ein O-Ring 123 kann zur Abdichtung der Verbindung zwischen Stützring 444 und Drehkörper 1 dienen.

Alternativ oder zusätzlich können wiederum Dichtungen 55a, 55b vorgesehen sein, eine Dichtung 55a zwischen dem Stützring 444 und dem Hohlkörper 2 und/oder eine Dichtung 55b zwischen dem Hohlkörper 2 und dem Drehkörper 1.

Bei der Lageranordnung 02.11 können der Hohlkörper 2 und/oder der Stützring 444 und/oder der Drehkörper 1 Löcher 2e, 444e und 1e aufweisen, die dazu vorgesehen sein können, die Lageranordnung 02.11 als Ganzes mit beispielsweise Schrauben umfassenden Verbindungsmitteln während ihres Einbaus in eine beispielsweise einen Teil eines Getriebes bildende oder ein Getriebe ganz oder zum Teil umfassende Vorrichtung zu fixieren.

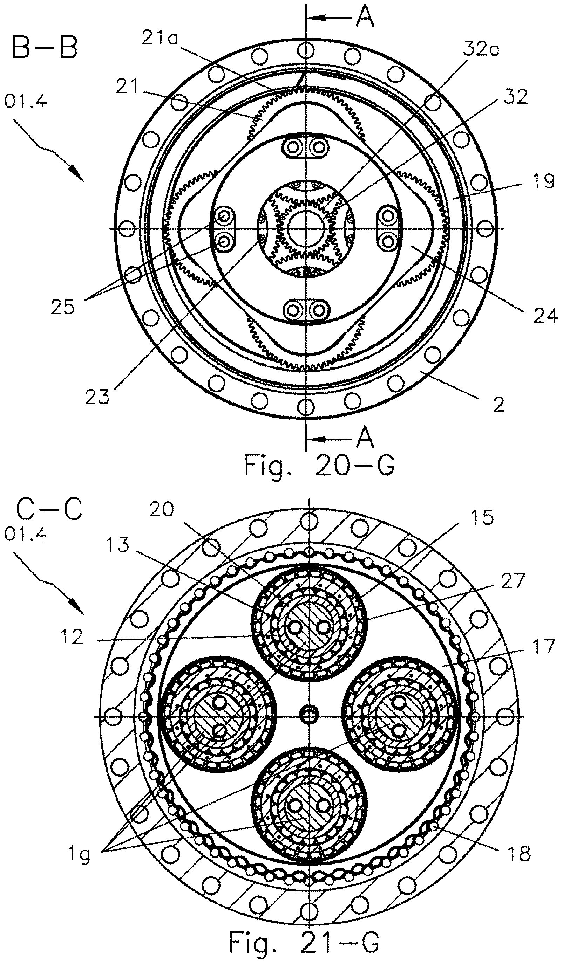

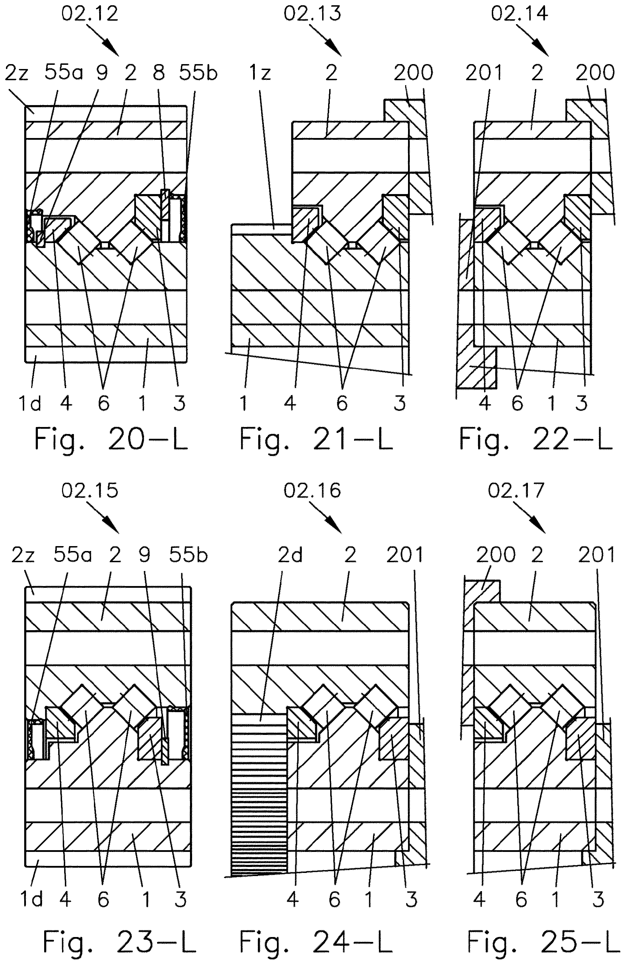

Bei der in Fig. 20-L dargestellten Lageranordnung 02.12 sind beidseitig der Wälzlagerringe außerhalb der Stützringe 3, 4 Dichtungen 55a, 55b zwischen dem Drehkörper 1 und dem Hohlkörper 2 angeordnet. Die axiale Lage des Stützrings 4 kann durch einen am Außenumfang des Drehkörpers 1 festgelegten Sprengring 9 gesichert sein. Die axiale Lage des Stützrings 3 kann durch einen am Innenumfang des Hohlkörpers 2 festgelegten Sprengring 8 gesichert sein. Der Hohlkörper 2 kann mit einer Außenverzahnung 2z versehen sein. Der Drehkörper 1 kann alternativ oder zusätzlich mit einer Innenverzahnung 1d versehen sein.

Die in Fig. 21-L dargestellte Lageranordnung 02.13 ist nicht abgedichtet und zum Einbau in Geräte vorgesehen. Der Drehkörper 1 kann mit einer Außenverzahnung 1z versehen sein. Die Außenverzahnung 1z kann als Keilverzahnung ausgeführt sein. Der am Hohlkörper 2 angeordnete Stützring 3 kann durch einen stirnseitig an den Hohlkörper 2 stoßenden Flansch 200 beispielsweise einer ein Getriebe ganz oder zum Teil umfassenden Vorrichtung gesichert sein. Der Stützring 4 kann durch die Formgebung des Außenumfangs des Drehkörpers 1 axial gesichert sein.

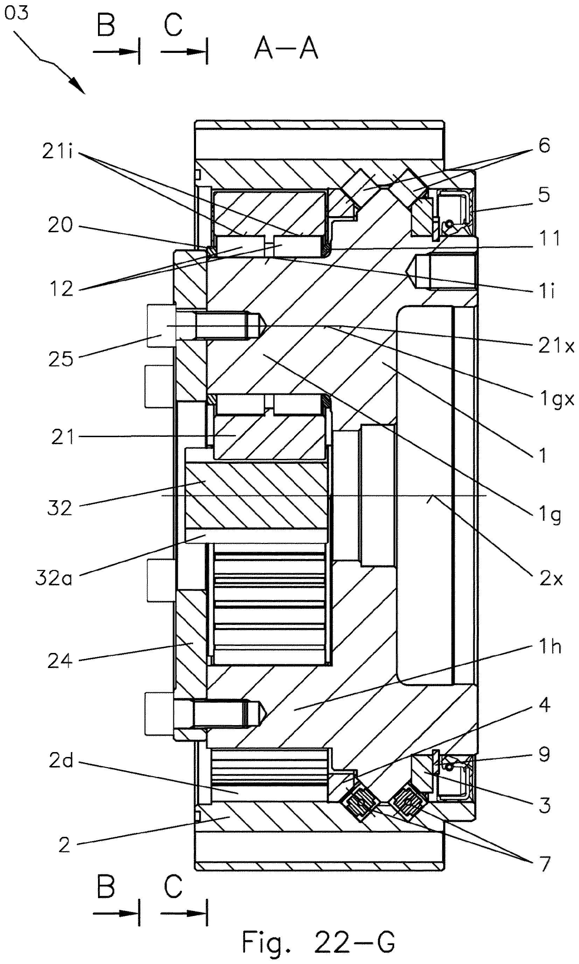

Im Unterschied zur in Fig. 21-L dargestellten Lageranordnung 02.13 ist bei der in Fig. 22-L dargestellten Lageranordnung 02.14 der Stützring 4 durch einen stirnseitig am Drehkörper 1 angeordneten Flansch 201 axial gesichert.

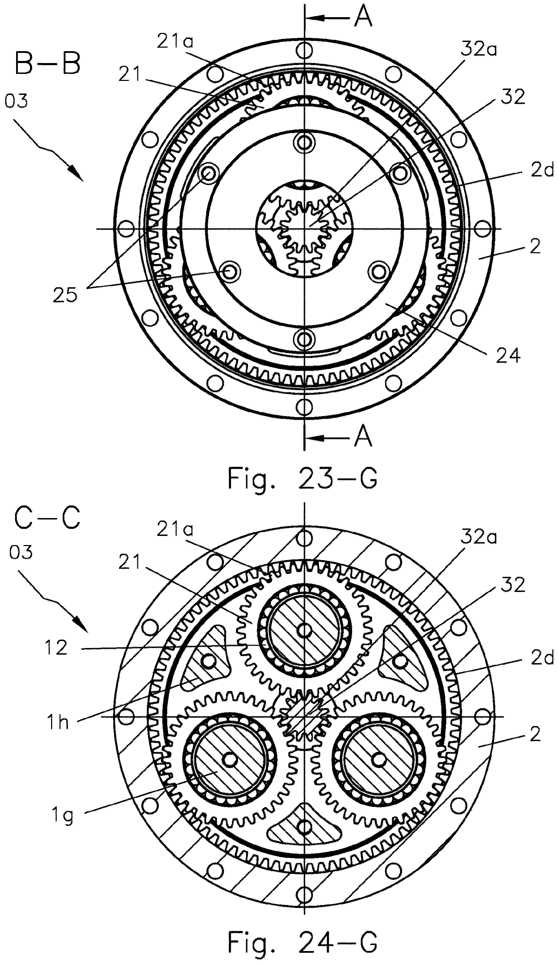

Im Unterschied zur in Fig. 20-L dargestellten Lageranordnung 02.12 ist bei der in Fig. 23-L dargestellten Lageranordnung 02.15 der Vorsprung am Außenumfang des Drehkörpers 1 angeordnet. Die durch durchgezogene Linien angedeuteten Wälzkörperachsen schneiden sich dadurch radial außerhalb des Drehkörpers 1, wohingegen sie sich bei einem am Innenumfang des Hohlkörpers 2 angeordneten Vorsprung im Drehkörper 1 schneiden. Bei der Lageranordnung 02.15 kann der Stützring 4 durch die Formgebung am Innenumfang des Hohlkörpers 2 axial gesichert sein. Die axiale Position des Stützrings 3 kann durch einen am Außenumfang des Drehkörpers 1 angeordneten Sprengring 9 gesichert sein.

Im Unterschied zur in Fig. 23-L dargestellten Lageranordnung 02.15 ist die in Fig. 24-L dargestellte Lageranordnung 02.16 nicht abgedichtet und daher zum Einbau in Geräte vorgesehen. Der am Drehkörper 1 angeordnete Stützring 3 kann durch einen stirnseitig am Drehkörper 1 angeordneten Flansch 201 axial gesichert sein. Der Hohlkörper 2 kann mit einer durch Nuten 2d gebildeten Innenverzahnung versehen, oder durch das Einarbeiten von zur Einlegung von als Zähne dienenden Wälzkörpern 18 geeigneten Nuten 2d für eine Innenverzahnung vorbereitet sein.

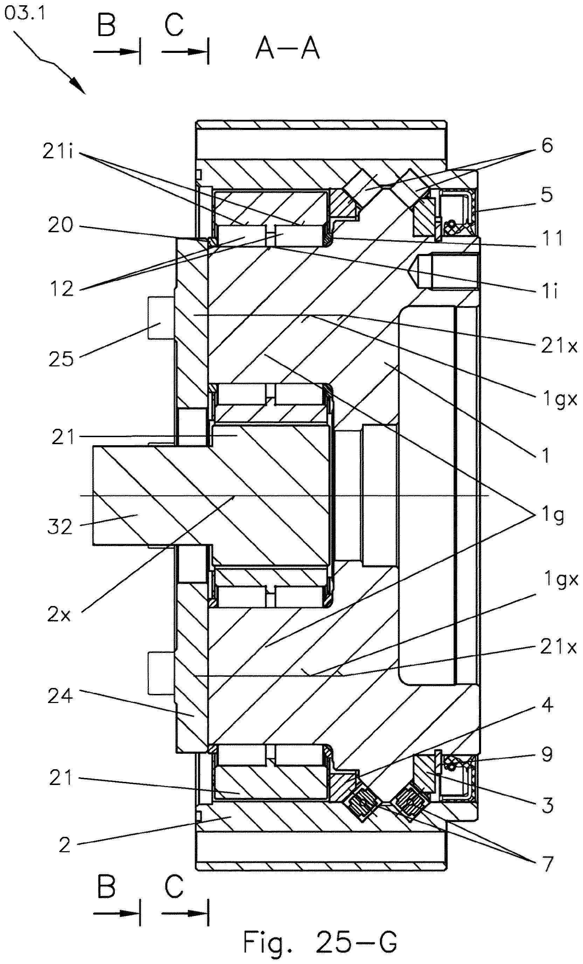

Im Unterschied zur in Fig. 24-L dargestellten Lageranordnung 02.16 ist bei der in Fig. 25-L dargestellten Lageranordnung 02.17 der Stützring 4 durch einen stirnseitig am Hohlkörper 2 angeordneten Flansch 200 axial gesichert.

Bei der in Fig. 26-L dargestellten Lageranordnung 02.18 ist der Vorsprung am Innenumfang des Hohlkörpers 2 angeordnet. Die Stützringe 3, 4 sind jeweils mit einer beispielsweise als Passung hergestellten Fläche 3c, 4c ausgeführt, mit welchen Flächen 3c, 4c sie beide jeweils auf einem beispielsweise ebenfalls als Passung ausgeführten Sitz 2c am Innenumfang des Hohlkörpers 2 angeordnet sind. Die Lageranordnung 02.18 zeichnet sich demnach durch einen symmetrischen Aufbau aus, bei welchem beide Stützringe 3, 4 am Hohlkörper 2 angeordnet sind. Die Stützringe können mit in Nuten am Innenumfang des Hohlkörpers 2 eingelegten Sprengringen 8 axial gesichert sein. In axialer Richtung beidseitig außerhalb der Sprengringe 8 können Dichtungen 55 zur Abdichtung des zwischen Hohlkörper 2 und Drehkörper 1 verbleibenden Ringspalts vorgesehen sein.

Zur Montage der Lageranordnung 02.18 kann vorteilhaft ein Montageflansch 202 verwendet werden, wie in Fig. 26a)-L dargestellt. In den Montageflansch 202 wird zu Beginn der Drehkörper 1 eingesetzt, dann der komplette erste Wälzlagerring aus beispielsweise Wälzkörper 6 und beispielsweise Trennstege als Separatoren 7 umfassenden Wälzelementen am Stück eingelegt wird, anschließend der Hohlkörper auf den ersten Wälzlagerring aufgelegt wird, danach der Stützring 3 eingelegt und dieser in axialer Richtung durch Einsetzen des Sprengrings 8 gesichert wird. Die Montage wird fortgesetzt, indem die gesamte Montageanordnung gedreht (Fig. 26b)-L) und der Montageflansch (202) entfernt wird (Fig. 26c)-L). Die Montage wird daraufhin der Reihe nach durch:
- Einlegen des Stützrings 4,
- Einsetzen des Sprengrings 8 zur axialen Sicherung des Stützrings 4, und
- Anordnung der Dichtung 55
abgeschlossen.

Die in Fig. 27-L dargestellte Lageranordnung 02.19 kann ebenfalls einen symmetrischen Aufbau mit gleicher Gestaltung der Stützringe 3, 4 und der zwischen Hohlrad 2 und Drehkörper 1 eingesetzten Dichtungen 55 aufweisen. Im Unterschied zu der in Fig. 26-L dargestellten und in einem Ablauf ihrer Montage in Fig. 26a)-L bis Fig. 26c)-L gezeigten Lageranordnung 02.18 ist bei der Lageranordnung 02.19 der Vorsprung wiederum am Außenumfang des Drehkörpers 1 angeordnet. Der Stützring 3 ist mit der als Passung ausgeführten Fläche 3c auf dem ebenfalls als Passung ausgeführten Sitz 1c am Drehkörper 1 angeordnet. Ebenso verhält es sich für den Stützring 4, der mit seiner als Passung ausgeführten Fläche 4c auf dem entsprechenden, ebenfalls als Passung ausgeführten Sitz 1c am Drehkörper 1 angeordnet ist.

Bei der in Fig. 27-L dargestellten Lageranordnung 02.19 wird die axiale Lage der Stützringe 3 und 4 durch die in Nuten am Außenumfang des Drehkörpers 1 eingesetzten Sprengringe 9 gesichert. Dabei ist die axiale Lage der Stützringe 3 und 4 vorteilhaft durch die Gestaltung des Drehkörpers 1 gewährleistet.

Bei der in Fig. 27a)-L dargestellten Lageranordnung 02.19 wird für deren Montage ein Montageflansch 203 verwendet, in den vor der Montage der den Lageraußernring bildende Hohlkörper 2 eingesetzt wird. Anschließend werden die Wälzkörper 6 und Separatoren 7 des ersten Wälzlagerrings eingesetzt. Anschließend erfolgt das Einlegen des den inneren Lagerring bildenden Drehkörpers 1. Dann werden die Wälzkörper 6 und Separatoren 7 des zweiten Wälzlagerrings eingesetzt. Anschließend erfolgt der Reihe nach das Einlegen des Stützrings 3, des angrenzenden äußeren Sprengrings 9 und der Dichtung 55.

Bei der in Fig. 27b)-L dargestellten Lageranordnung 02.19 wird die Montage fortgesetzt, indem die Montagebaugruppe gedreht und der Montageflansch (203) entfernt wird.

Bei der in Fig. 27c)-L dargestellten Lageranordnung 02.19 wird die Montage durch Einlegen des Stützrings 4, des angrenzenden äußeren Sprengrings 9 und der Dichtung 55 beendet.

Es ist ersichtlich, dass der die Hohl-Drehkörper-Lageranordnungen 02 betreffende Gegenstand der Erfindung alternativ durch ein als ein Zykloidgetriebe ausgeführtes Getriebe 01, 01.1, 01.4, 01.5 mit einem Hohlkörper 2 mit einer Hohlkörperachse 2x und einem gegenüber diesem um die Hohlkörperachse 2x drehbar angeordneten Drehkörper 1 und mit einer voranstehend beschriebenen, den Drehkörper 1 drehbar gegenüber dem Hohlkörper 2 lagernden Hohl-Drehkörper-Lageranordnung 02 verwirklicht sein kann.

Die beschriebenen Hohl-Drehkörper-Lageranordnungen 02, können einzelne oder eine Kombination der zuvor beschriebenen und/oder in den nachfolgenden Ansprüchen in Verbindung mit einem Getriebe 01, 01.1 angeführten Merkmale aufweisen, ebenso wie die beschriebenen Getriebe 01, 01.1 einzelne oder eine Kombination mehrerer zuvor beschriebenen und/oder in den nachfolgenden Ansprüchen in Verbindung mit einer Hohl-Drehkörper-Lageranordnung 02 angeführten Merkmale aufweisen können.

Sämtliche beschriebenen Lageranordnungen und/oder Getriebe können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung zu den in den Zeichnungen dargestellten Ausführungsbeispielen beschriebene Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von kompakt bauenden Getrieben, insbesondere von Präzisionsgetrieben, insbesondere von Zykloidgetriebe umfassenden Getrieben, gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Getriebe
- 01.1: Getriebe
- 01.2: Getriebe
- 01.3: Getriebe
- 01.4: Getriebe (Struktur)
- 01.5: Getriebe (Struktur)
- 02: Lageranordnung (Hohl-Drehkörper-Lageranordnung)
- 02.1: Lageranordnung
- 02.2: Lageranordnung
- 02.3: Lageranordnung
- 02.4: Lageranordnung
- 02.5: Lageranordnung
- 02.6: Lageranordnung
- 02.7: Lageranordnung
- 02.8: Lageranordnung
- 02.9: Lageranordnung
- 02.10: Lageranordnung
- 02.11: Lageranordnung
- 02.12: Lageranordnung
- 02.13: Lageranordnung
- 02.14: Lageranordnung
- 02.15: Lageranordnung
- 02.16: Lageranordnung
- 02.17: Lageranordnung
- 02.18: Lageranordnung
- 02.19: Lageranordnung
- 01x: Drehkörperachse
- 1: Drehkörper
- 1a: Wälzkörperlauffläche (am Drehkörper)
- 1c: Sitz (am Drehkörper 1)
- 1d: Innenverzahnung (am Drehkörper 1)
- 1e: Loch
- 1g: Fortsatz (am Drehkörper 1)
- 1h: Vorsprung (am Drehkörper 1)
- 1i: erste Wälzkörperlauffläche (am Fortsatz 1g des Drehkörpers 1)
- 1j: Fläche
- 1z: Außenverzahnung
- 2: Hohlkörper
- 2a: Wälzkörperlauffläche (am Hohlkörper)
- 2b: Stützfläche (am Hohlkörper)
- 2c: Sitz (am Hohlkörper)
- 2d: Nut
- 2e: Loch
- 2f: Schmierloch
- 2j: Fläche
- 2x: Hohlkörperachse
- 2z: Außenverzahnung
- 3: Stützring
- 3b: Stützfläche (am Stützring 3 ausgebildet)
- 3c: Fläche
- 4: Stützring
- 4b: Stützfläche (am Stützring 4 ausgebildet)
- 4c: Fläche
- 5: Dichtung
- 6: Wälzkörper (der Hohl-Drehkörper-Lageranordnung)
- 6a: Rollfläche (Mantelfläche des Wälzkörpers 6)
- 6b: Stirnfläche (des Wälzkörpers 6)
- 7: Separator
- 8: Sprengring
- 9: Sprengring
- 10: Getriebegehäuse
- 10c: Halterung
- 10d: Nut
- 10j: Fläche
- 10x: zentrale Getriebeachse
- 11: Stützring
- 12: Wälzkörper (der Fortsatz-Exzenterwelle-Lageranordnung)
- 13: außermittige Exzenterwelle
- 13e: exzentrischer Abschnitt
- 13h: Öffnung (am der Exzenterwelle 13)
- 13i: zweite Wälzkörperlauffläche (am Innenumfang der Exzenterwelle 13)
- 13x: Fortsatzachse
- 14: Nadelrolle
- 15: Wälzkörper
- 16: Zykloidenscheibe
- 16b: Außenverzahnung (der Zykloidenscheibe 16)
- 16e: zweite Wälzkörperlauffläche (in außermittiger Öffnung an Zykloidenscheibe 16)
- 16f: zweite Wälzkörperlauffläche (in zentraler Öffnung an Zykloidenscheibe 16)
- 17: Zykloidenscheibe
- 17b: Außenverzahnung (der Zykloidenscheibe 17)
- 17e: zweite Wälzkörperlauffläche (in außermittiger Öffnung an Zykloidenscheibe 17)
- 17f: zweite Wälzkörperlauffläche (in zentraler Öffnung an Zykloidenscheibe 17)
- 18: Wälzkörper
- 19: Sicherungsring
- 20: Stützring
- 21: Planetenrad
- 21a: Außenverzahnung (am Planetenrad 21)
- 21b: Form
- 22: Schraube
- 23: Schraube
- 24: Flansch
- 24g: Vorsprung
- 24h: Vorsprung
- 24j: Fläche
- 25: Schraube
- 26: Verschlussstopfen
- 27: Käfig
- 28: Sonnenrad
- 28a: Außenverzahnung (des Sonnenrads 28)
- 29: Lager
- 30: Stirnrad
- 30a: Verzahnung
- 31: Lager
- 32: Ritzel
- 32a: Verzahnung
- 33: Vierpunktkontaktkugellager
- 34: Schrägkugellager
- 35: Lager mit gekreuzten Rollen
- 36: zentrale Exzenterwelle
- 36f: exzentrischer Abschnitt (der zentralen Exzenterwelle)
- 37: Lager
- 38: Rolle
- 40: O-Ring
- 41: Beschickungsloch
- 42: Sicherungsring (am Sonnenrad 28)
- 43: Lager
- 44: Stützring
- 44b: Stützfläche
- 44e: Loch
- 45: Sicherungsring (am Flansch 24)
- 46: Sicherungsring (am Sonnenrad 28)
- 55: Dichtung
- 55a: Dichtung
- 55b: Dichtung
- 100: Flansch
- 100c: Sitz
- 101: Flansch
- 102: Flansch (ersetzt Stützring 4 mit Stützfläche 4b)
- 102b: Stützfläche
- 103: Maschinengestell
- 110: Schraube
- 111: Schraube
- 112: Schraube
- 113: Schraube
- 114: Schraube
- 115: Schraube
- 120: O-Ring
- 121: O-Ring
- 122: O-Ring
- 123: O-Ring
- 200: Flansch
- 201: Flansch
- 202: Montageflansch
- 203: Montageflansch
- 444: Stützring
- 444b: Stützfläche
- 444e: Loch

- e: Exzentrizität

## Patentansprüche

1. Lageranordnung (02, 02.1, 02.2, 02.3, 02.4, 02.5, 02.6, 02.7, 02.8, 02.9, 02.10, 02.11, 02.12, 02.13, 02.14, 02.15, 02.16, 02.17, 02.18, 02.19) für ein kompakt zu bauendes Getriebe (01, 01.1, 01.4, 01.5), mit zwei als einen Hohlkörper (2) mit einer Hohlkörperachse (2x) und ein um diese drehbarer Drehkörper (1) ausgebildeten, relativ zueinander drehbaren Lagerorganen, zwischen denen zwei Wälzlagerringe angeordnet sind, wobei:
- an einem der beiden Lagerorgane (1, 2) ein Vorsprung mit einer radial zum verbleibenden Lagerorgan (2, 1) weisenden Spitze angeordnet ist, die zwischen zwei die axiale Erstreckung des Vorsprungs begrenzenden, entgegengesetzt geneigten, ersten Kegelstumpfmantelflächen zweier mit ihren Kegelachsen mit der Hohlkörperachse (2x) übereinstimmender Kegel liegt, auf jeder dieser erste Wälzkörperlaufflächen (1a, 2a) bildender erster Kegelstumpfmantelflächen die Wälzkörper (6) jeweils eines Wälzlagerrings abwälzen,
- gegenüberliegend am verbleibenden Lagerorgan (2, 1) zwei V-(Kehl-)nuten eingelassen sind, jeweils eine deren Kehlnutwandungen eine von insgesamt zwei den ersten Wälzkörperlaufflächen (1a, 2a) gegenüberliegenden zweiten Kegelstumpfmantelflächen als zweite Wälzkörperlaufflächen (2a, 1a) bildet, auf jeder von denen die Wälzkörper (6) je eines der zwei Wälzlagerringe am verbleibenden Lagerorgan (2, 1) abwälzen,
- axial beidseitig des Vorsprungs jeweils ein Wälzlagerring zwischen den jeweiligen ersten und zweiten Wälzkörperlaufflächen (1a, 2a) angeordnet ist, , und
- axial beidseitig der Wälzlagerringe jeweils ein Stützring (3, 4) angeordnet ist,
wobei die Stützringe (3, 4) auf ihren dem Vorsprung zugewandten Stirnseiten jeweils eine kegelstumpfmantelflächenförmige Stützfläche (3b, 4b) aufweisen, welche zusammen mit den ersten Wälzkörperlaufflächen (1a, 2a) die Nutwandungen zweier zweigeteilter V-(Kehl-)nuten bilden.

2. Lageranordnung nach Anspruch 1, wobei die Wälzlagerringe der Lageranordnung Wälzkörper (6) mit die Hohlkörperachse (2x) schneidenden Wälzkörperachsen umfassen.

3. Lageranordnung nach Anspruch 1 oder 2, wobei die Lageranordnung für ein als Zykloidgetriebe ausgebildetes Getriebe (01, 01.1) mit mindestens einer im Hohlkörper (2) abwälzenden, auf einem exzentrischen Abschnitt (13e, 36f) mindestens einer um eine parallel zur Hohlkörperachse (2x) verlaufende Exzenterwelle (13, 36) drehbar angeordneten Zykloidenscheibe (16, 17) ausgebildet ist.

4. Lageranordnung (02, 02.1, 02.2, 02.3, 02.4, 02.10, 02.12, 02.13, 02.14, 02.18) nach Anspruch 1, 2 oder 3, wobei der Vorsprung am Innenumfang des Hohlkörpers (2) angeordnet ist und radial nach innen ragt, und die V-(Kehl-)nuten am Außenumfang des Drehkörpers (1) angeordnet sind.

5. Lageranordnung (02.5, 02.6, 02.7, 02.8, 02.9, 02.11, 02.15, 02.16, 02.17, 02.19) nach Anspruch 1, 2 oder 3, wobei der Vorsprung am Außenumfang des Drehkörpers (1) angeordnet ist und radial nach außen ragt, und die V-(Kehl-)nuten am Innenumfang des Hohlkörpers (2) angeordnet sind.

6. Lageranordnung nach einem der Ansprüche 1 bis 5, wobei jeder Wälzlagerring aus abwechselnd Wälzkörper (6) und Separatoren (7) umfassenden Wälzlagerelementen besteht.

7. Lageranordnung nach einem der Ansprüche 1 bis 6, wobei
- die Stützringe (3, 4) beide am Hohlkörper (2) oder beide am Drehkörper (1) angeordnet sind, oder
- ein Stützring (3, 4) am Hohlkörper (2) und der andere Stützring (4, 3) am Drehkörper (1) angeordnet ist.

8. Lageranordnung nach einem der Ansprüche 1 bis 7, wobei die ersten Wälzkörperlaufflächen (1a, 2a) unter einem eingeschlossenen Winkel von 75° bis 105° benachbart sind.

9. Lageranordnung nach einem der Ansprüche 1 bis 8, wobei die Wälzkörper (6) als:
- Zylinderrollen ausgebildet sind und die jeweils dem selben Wälzlagerring zugeordneten ersten und zweiten Wälzkörperlaufflächen (1a, 2a) parallel zueinander verlaufen, oder
- als Kegelrollen ausgebildet sind und die jeweils dem selben Wälzlagerring zugeordneten ersten und zweiten Wälzkörperlaufflächen (1a, 2a) einen dem Öffnungswinkel des Ergänzungskegels zum Kegelstumpf der Kegelrollen entsprechenden Winkel einschließen.
